# EUROPEAN PATENT SPECIFICATION

(11) **EP 0 585 875 B1**
(45) Date of publication and mention of the grant of the patent: **22.03.2000**
(21) Application number: 93113903.4
(22) Date of filing: 31.08.1993
(51) Int. Cl.: G10K 11/16

(54) **Vibration damping system for vehicle**
Kraftwagenvibrationsdampfungsanordnung
Dispositif pour attenuer des vibrations pour un véhicule

(30) Priority: 31.08.1992 JP 23074992; 07.09.1992 JP 23816992; 06.08.1993 JP 19574493
(43) Date of publication of application: 09.03.1994
(73) Proprietor: Mazda Motor Corporation, Aki-gun Hiroshima-ken (JP)
(72) Inventor: Nakao, Norihiko, c/o Mazda Motor Corporation, Aki-gun, Hiroshima-ken (JP); Tukahara, Yutaka, c/o Mazda Motor Corporation, Aki-gun, Hiroshima-ken (JP); Ikeda, Naoki, c/o Mazda Motor Corporation, Aki-gun, Hiroshima-ken (JP); Takehara, Shin, c/o Mazda Motor Corporation, Aki-gun, Hiroshima-ken (JP); Seni, Hirofumi, c/o Mazda Motor Corporation, Aki-gun, Hiroshima-ken (JP); Harada,, Shingo, c/o Mazda Motor Corporation, Aki-gun, Hiroshima-ken (JP); Santo, Chiaki, c/o Mazda Motor Corporation, Aki-gun Hiroshima-ken (JP)
(74) Representative: Müller-Boré & Partner Patentanwälte

(56) References cited:
- EP-A- 0 479 367
- WO-A-88/02912
- WO-A-92/08225

## Description

### BACKGROUND OF THE INVENTION

### Field of the Invention

This invention relates to a vibration damping system for a vehicle for damping vibration of a particular vibrating element such as the vehicle body, air in the cabin or the like mainly generated by vibration of a power unit, and more particularly to a vibration damping system for a vehicle which has a vibrator for vibrating the particular vibrating element and vibrates the particular vibrating element in the phase reverse to that of the vibration of the particular vibrating element and in the amplitude equal to that of the vibration of the same, thereby damping the vibration of the vehicle body or air in the cabin (noise).

### Description of the Prior Art

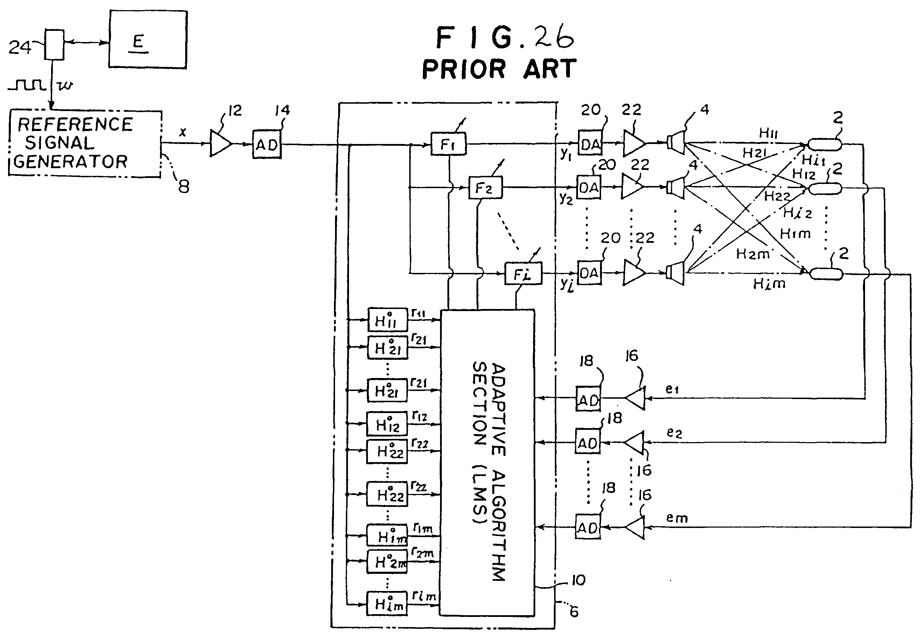

As disclosed in Japanese Unexamined Patent Publication No. 1(1989)-501344, there has been known a vibration damping system for a vehicle comprising, in addition to the vibrator, a vibration sensor which detects vibration of a particular vibrating element on the vehicle body and a drive control means which performs calculation on the basis of the detecting signal from the vibration sensor and causes the vibrator to vibrate the particular vibrating element so that the vibration of the particular vibrating element is damped. In such vibration damping systems, there are those in which an optimization technique is employed in the calculation performed by the drive control means as in the vibration damping system disclosed in the above identified patent publication and there are those in which the optimization technique is not employed. The former systems are generally arranged as shown in Figure 26.

The vibration damping system shown in Figure 26 is for damping vibration of air in the cabin (noise) generated due to vibration of an engine E (as the power unit) and comprises a plurality of microphones 2 (m in number) which are disposed in predetermined positions in the cabin and detect vibration of air in the respective predetermined positions, a plurality of speakers 4 (i in number) which are disposed in predetermined positions in the cabin and vibrate air in the cabin to damp the vibration of air, and a drive control means 6 which generates drive signals y₁ to yᵢ for controlling the speakers 4. The vibration damping system is further provided with a reference signal generating means 8 which detects an ignition pulse signal w, generated in relation to the revolution speed of the engine E, from an ignition coil 24 and shapes the waveform of the ignition pulse signal w, thereby generating a reference signal x.

The microphones 2 detect the vibration due to the vibration of the engine E together with the vibration generated by the speakers 4 and output the result of the detection as detecting signals e₁ to eₘ. The detecting signals e₁ to eₘ are input into the drive control means 6 through amplifiers 16 and A/D convertors 18. The reference signal x generated by the reference signal generating means 8 is input into the drive control means 6 through an amplifier 12 and an A/D convertor 14.

The drive control means 6 comprises adaptive filters F1 to Fi which adjust the phase and the amplitude of the reference signal x and an adaptive algorithm section 10 which updates every moment the factors of the adaptive filters F1 to Fi so that the detecting signals e₁ to eₘ input from the microphones 2 are minimized, and outputs the signals passing through the adaptive filters F1 to Fi as the drive signals y₁ to yᵢ. As the adaptive algorithm for updating the factors of the adaptive filters F1 to Fi, there have been known Least Mean Square Method, Newton Method, Simplex Method, Powell Method and the like. In this example, Least Mean Square Method is employed. In Least Mean Square Method, the reference signal x is input into the adaptive algorithm section 10 through a digital filter H°_{IM} (I standing for 1, 2, ..., i and M standing for 1, 2, ..., m). The digital filter H°_{IM}. is modeled on the transmission properties between I-th speaker 4 and M-th microphone 2 and the space distance between the speaker 4 and the microphone 2 is thus interpolated.

A spectral analysis shows that vibration of a power unit such as an engine includes many sinusoidal vibration components having frequencies of integral multiples of the engine rpm and that the vibration components have different levels and one or more particular components have especially high levels. By damping the vibration caused by the components of the vibration of the power unit at such high levels, a sufficient vibration damping effect can be obtained, and accordingly, control is generally effected with the aim of damping the vibration caused by the components of the vibration of the power unit at such high levels. For example, in the case of a vehicle having a four-cycle four-cylinder engine, the vibration component having a frequency of twice the engine speed (will be referred to as "the secondary component", hereinbelow) has an especially high level, and control is generally effected with intention of damping the vibration caused by the secondary component.

Though the vibration damping system described above is arranged to damp the vibration of air in the cabin (noise) caused by the engine vibration, solid elements of the vehicle body such as a frame of the vehicle body, panels of the vehicle body, seats, a steering wheel and the like are also caused to vibrate by the engine vibration. Accordingly it is preferred that not only the vibration of air in the cabin but also the vibration of the solid elements be damped. However the vibration damping system having speakers and microphones respectively as the vibrators and the vibration sensors cannot damp the vibration of the solid elements though can damp the vibration of air.

On the other hand, in the case of vibration damping system disclosed, for instance, in Japanese Unexamined Patent Publication No. 3(1991)-219139 having an engine mount which supports the engine relative to the vehicle body and also functions as a vibrator for vibrating engine (will be referred to as "the vibrating engine mount", hereinbelow) and an acceleration sensor which functions as the vibration sensor cannot damp the vibration of air with a high efficiency though can damp the vibration of the solid elements with a high efficiency.

It may be possible to satisfactorily damp both the vibration of air and the vibration of the solid elements by providing both a speaker and a vibrating engine mount and controlling them.

However when the number of the kinds of vibrators is simply increased, the load on the drive control means in calculation is increased in vain or electric power consumption to drive the vibrators excessively increases, which results in inefficient vibration damping effect.

WO 88/02912 discloses an active vibration control system for reducing vibration generated by a primary source wherein at least one reference signal containing at least one selected harmonics of the primary source of vibration is supplied to means driving a plurality of secondary vibration sources, such that the vibration energy detected by sensor means operable to sense the vibration field established by the primary and secondary sources is reduced.

EP-A-0 479 367 discloses a method and an apparatus for attenuating harmonic noise components contained within noise generated by an internal combustion engine, based upon the rotation of the engine during its operating cycle. A signal representing selected multiple harmonic noise components is generated from a table of values, based upon the engine rotation. This signal is adaptively filtered to produce a cancelling waveform which is superimposed onto the engine noise to attenuate the selected multiple noise harmonics.

It is the object of the invention to provide a vibration damping system for a vehicle which can damp satisfactorily and efficiently both the vibration of air and the vibration of the solid elements caused by the vibration of the power unit.

This object is fulfilled by a vibration damping system having the features disclosed in claims 1 or 2. Preferred embodiments are defined in the dependent subclaims.

According to the present invention, there is provided a vibration damping system for a vehicle comprising a vibration detecting means which detects vibration of solid elements on the vehicle and vibration of air inside the vehicle, a first vibrator which supports a power unit relative to the vehicle body and directly vibrates the vehicle body, a second vibrator which directly vibrates air inside the vehicle body, a drive control means which performs calculation on the basis of a detecting signal from the vibration detecting means and controls the first and the second vibrators on the basis of the result of the calculation so that the vibration of the solid element and the vibration of air inside the vehicle body are damped, and a ratio changing means which changes the vibrator control ratio of the first and second vibrators according to the condition of a predetermined factor of the vehicle.

The term "solid elements" means vehicle body components such as a frame of the vehicle body, panels of the vehicle body, seats, a steering wheel and the like.

The term "power unit" means an engine, a transmission and/or the like.

The vibration detecting means may be a vibration sensor which can detect both the vibration of the solid element and the vibration of air inside the vehicle body, or may be a combination of a vibration sensor which can detect the vibration of the solid element and vibration sensor which can detect the vibration of air inside the vehicle body.

According to a first aspect of the present invention, the vibrator control ratio is changed by changing the ratio of the part of the operational power of the drive control means allotted to the control of the first vibrator to the part of the operational power of the drive control means allotted to the control of the second vibrator.

According to a second aspect of the present invention, the vibrator control ratio is changed by changing the ratio of the proportion of the amount of the vibration of the first vibrator set by the drive control means to the amount of the vibration of the first vibrator optimal to damp the vibration of the solid element to the proportion of the amount of the vibration of the second vibrator set by the drive control means to the amount of the vibration of the second vibrator optimal to damp the vibration of the air inside the vehicle body.

The term "the amount of the vibration of the first vibrator optimal to damp the vibration of the solid element" or "the amount of the vibration of the second vibrator optimal to damp the vibration of the air inside the vehicle body" means the amount of the vibration by which the vibrator is to be vibrated to optimally damp the vibration of the solid element or air inside the vehicle.

Said predetermined factor of the vehicle may be the engine speed, the vehicle speed, the loudness of the audio system on the vehicle, the degree of opening of the window, the number of the passengers on the vehicle, the level of noise included in the detecting signal from the vibration detecting means, the electric load, the acceleration and deceleration of the vehicle, the air flow of an air-conditioner on the vehicle, whether the vibrators are in the normal condition or in an abnormal condition, the vibration of the power unit or the like.

The vibration damping system of the present invention may be further provided with a manual ratio setting means for manually setting the vibrator control ratio.

In the vibration damping system of the present invention, the vibration of the solid element is damped by the first vibrator and the noise in the cabin is damped by the second vibrator. Accordingly, both the vibration of the solid element and the noise in the cabin can be effectively damped. At the same time, since the vibrator control ratio is changed according to a predetermined factor of the vehicle, an optimal damping of the vibration of the solid element and the noise in the cabin can be realized.

For example, when the vibrator control ratio is changed by changing the ratio of the part of the operational power of the drive control means allotted to the control of the first vibrator to the part of the operational power of the drive control means allotted to the control of the second vibrator, one of the vibration of the solid element and the noise in the cabin which is to be preferentially damped can be effectively damped without increasing the operational load on the drive control means. Further when the vibrator control ratio is changed by changing the ratio of the proportion of the amount of the vibration of the first vibrator set by the drive control means to the amount of the vibration of the first vibrator optimal to damp the vibration of the solid element to the proportion of the amount of the vibration of the second vibrator set by the drive control means to the amount of the vibration of the second vibrator optimal to damp the vibration of the air inside the vehicle body, the vibrator driving of which is not expected to result in satisfactory damping of the vibration is driven by an amount less than the amount optimal to damp the vibration, whereby electric power is saved.

### BRIEF DESCRIPTION OF THE DRAWINGS

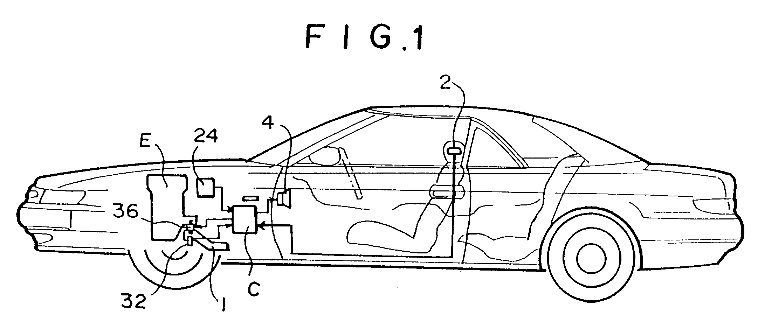

Figure 1 is a schematic view showing a vehicle provided with a vibration damping system in accordance with a first embodiment of the present invention,

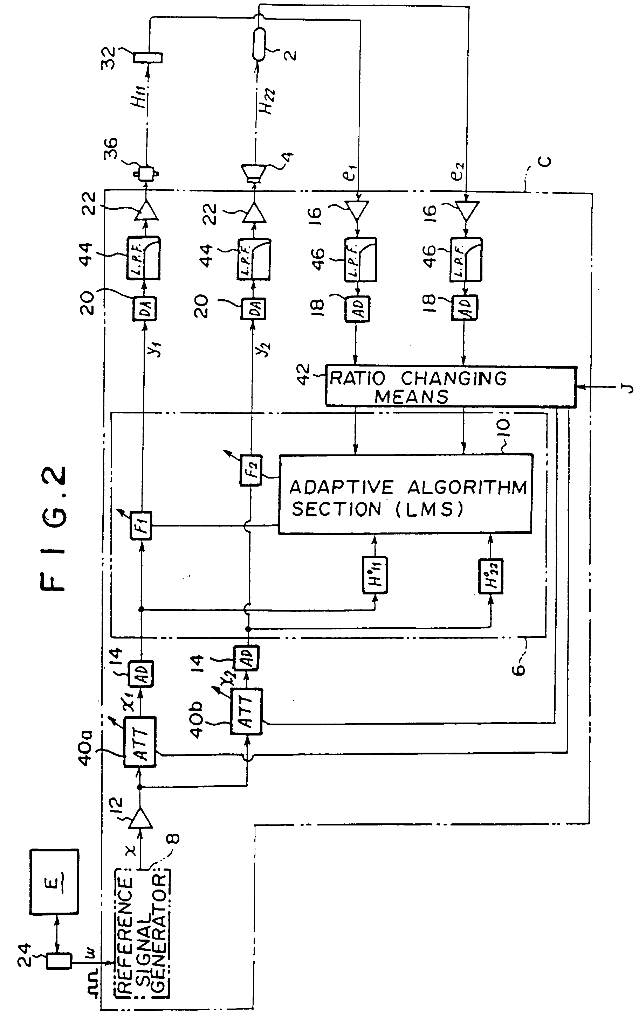

Figure 2 is a schematic view showing the structure of the controller employed in the vibration damping system,

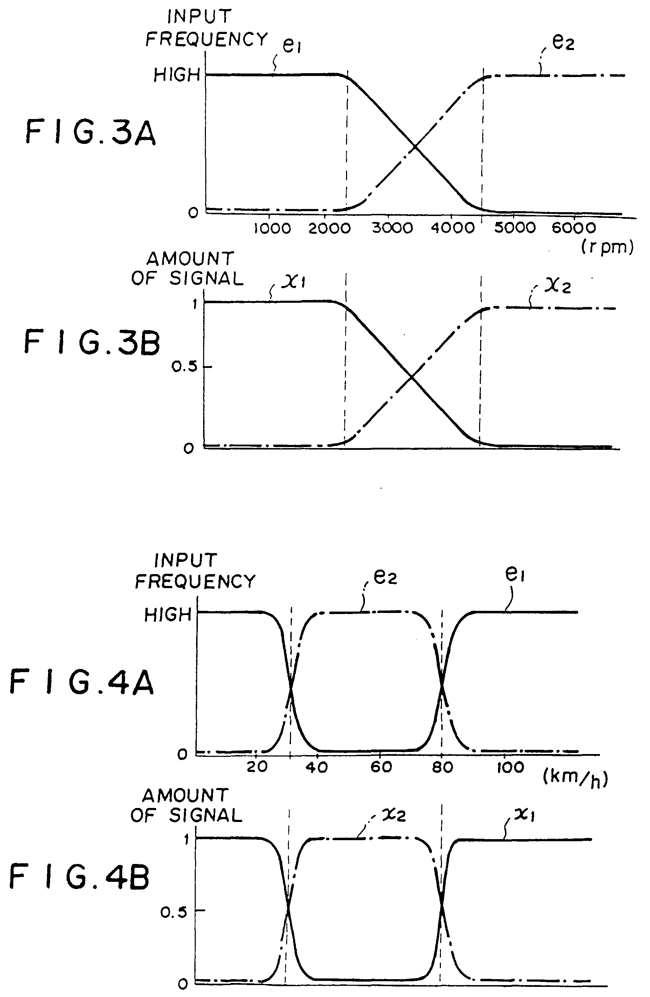

Figures 3A and 3B are views respectively showing the relation of the input frequencies of the detecting signals to the engine speed and the relation of the amount of the adjusted reference signals input into the drive control means to the engine speed when the ratio changing means changes the vibrator control ratio according to the engine speed, the broken lines in the drawings showing the correspondence therebteween,
Figures 4A and 4B are views respectively showing the relation of the input frequencies of the detecting signals to the vehicle speed and the relation of the amount of the adjusted reference signals input into the drive control means to the vehicle speed when the ratio changing means changes the vibrator control ratio according to the vehicle speed,

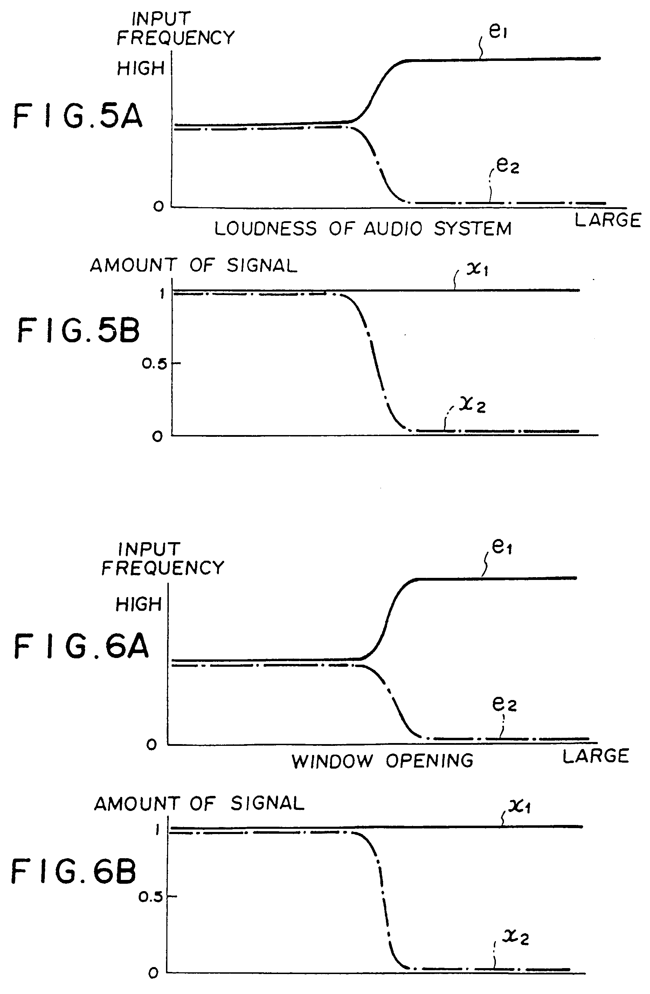

Figures 5A and 5B are views respectively showing the relation of the input frequencies of the detecting signals to the loudness of the audio system and the relation of the amount of the adjusted reference signals input into the drive control means to the loudness of the audio system when the ratio changing means changes the vibrator control ratio according to the loudness of the audio system,
Figures 6A and 6B are views respectively showing the relation of the input frequencies of the detecting signals to the degree of opening of the window and the relation of the amount of the adjusted reference signals input into the drive control means to the degree of opening of the window when the ratio changing means changes the vibrator control ratio according to the degree of opening of the window,

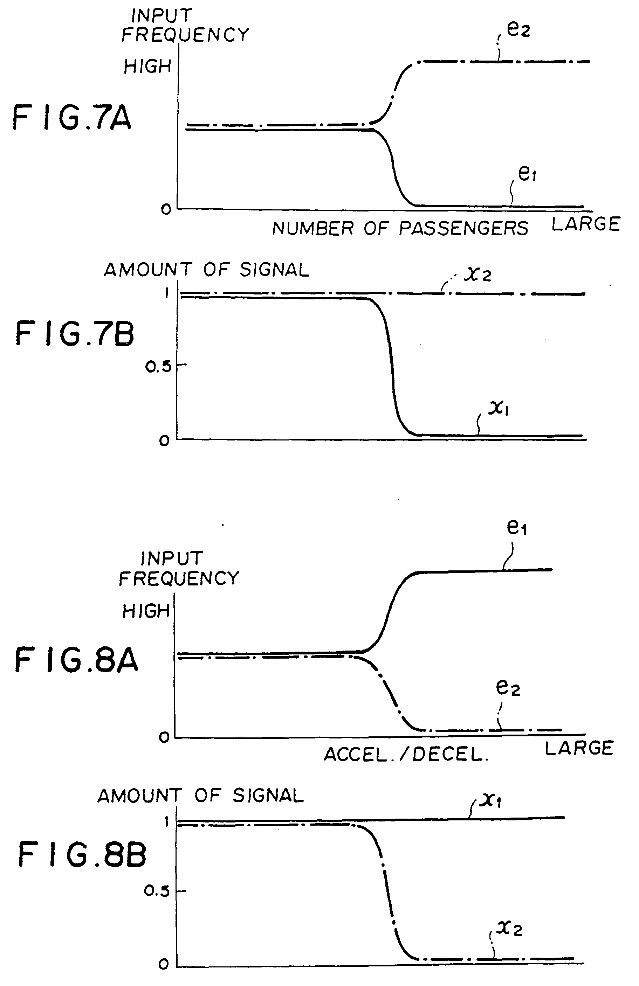

Figures 7A and 7B are views respectively showing the relation of the input frequencies of the detecting signals to the number of the passengers and the relation of the amount of the adjusted reference signals input into the drive control means to the number of the passengers when the ratio changing means changes the vibrator control ratio according to the number of the passengers,
Figures 8A and 8B are views respectively showing the relation of the input frequencies of the detecting signals to the degree of acceleration and deceleration of the vehicle and the relation of the amount of the adjusted reference signals input into the drive control means to the degree of acceleration and deceleration of the vehicle when the ratio changing means changes the vibrator control ratio according to the degree of acceleration and deceleration of the vehicle,

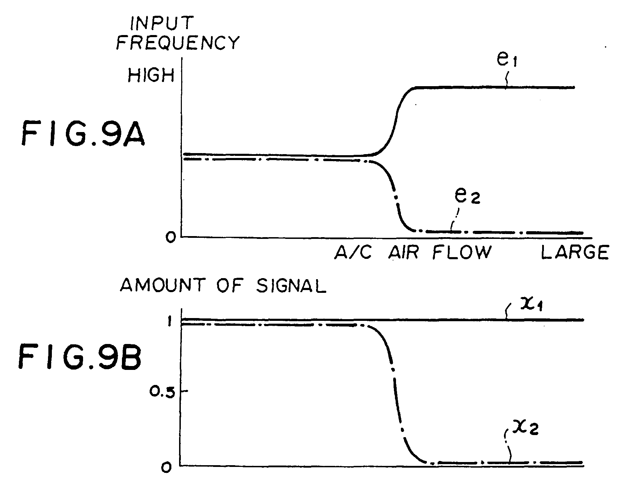

Figures 9A and 9B are views respectively showing the relation of the input frequencies of the detecting signals to the air flow of the air-conditioner and the relation of the amount of the adjusted reference signals input into the drive control means to the air flow of the air-conditioner when the ratio changing means changes the vibrator control ratio according to the air flow of the air-conditioner,

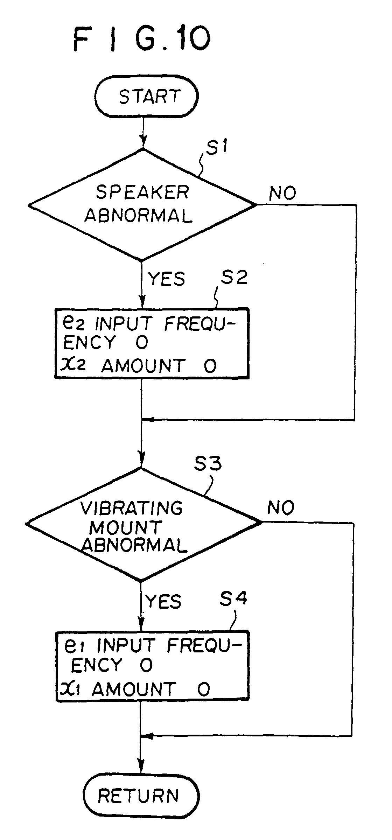

Figure 10 is a flow chart for illustrating the operation of the ratio changing means 42 when changing the vibrator control ratio according to whether the vibrating engine mount and the speaker are in the normal condition,

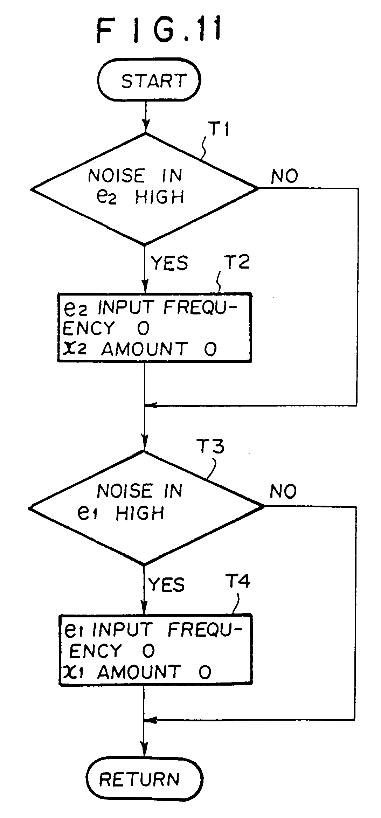

Figure 11 is a flow chart for illustrating the operation of the ratio changing means when changing the vibrator control ratio according to the noise level in the detecting signals,

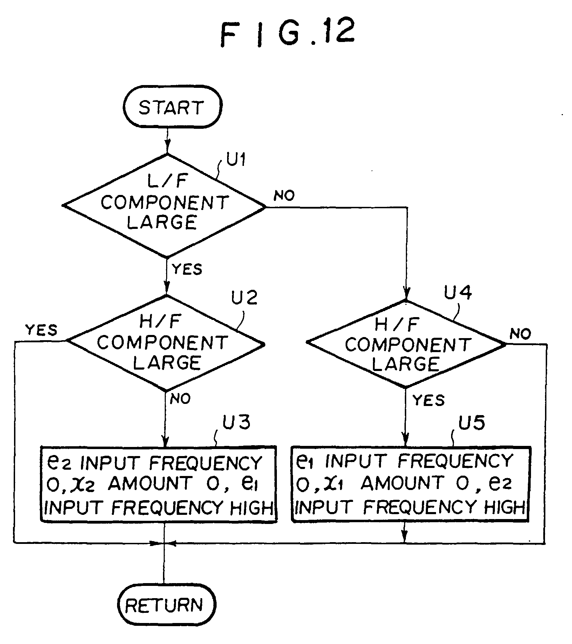

Figure 12 is a flow chart for illustrating the operation of the ratio changing means when changing the vibrator control ratio according to the vibration of the engine,

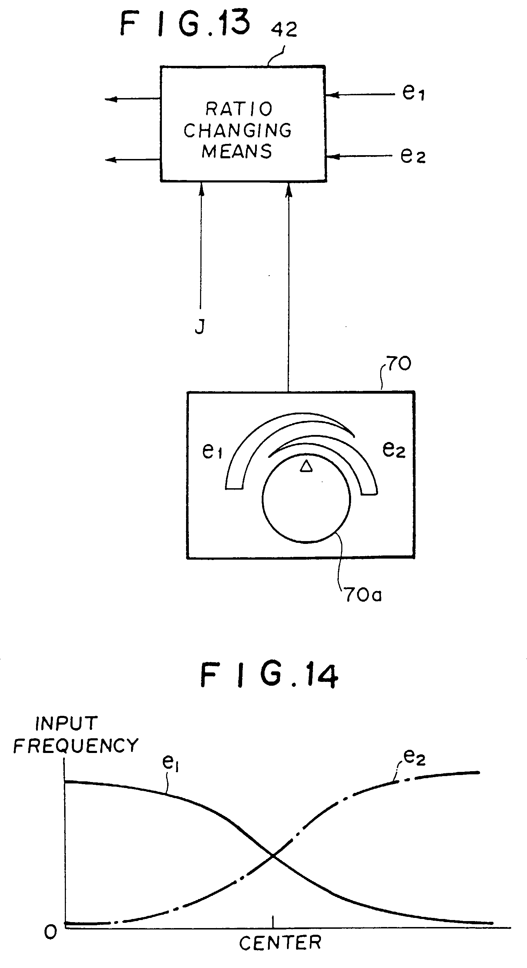

Figure 13 is a schematic view showing a manual ratio setting means,
Figure 14 is a view showing the change of the input frequencies of the detecting signals when the vibrator control ratio is manually changed,

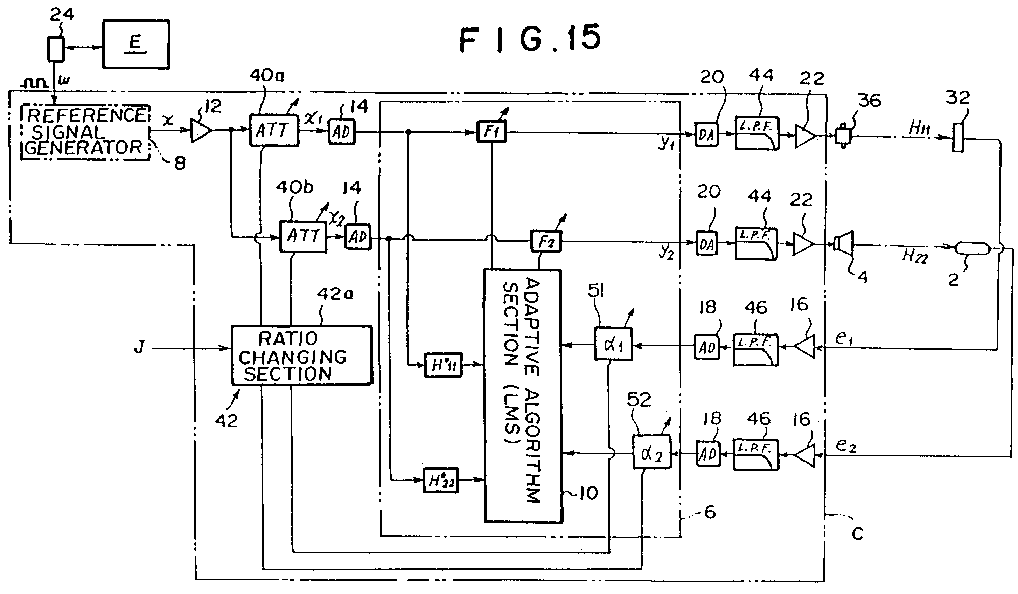

Figure 15 is a schematic view showing the structure of the controller employed in the vibration damping system in accordance with a second embodiment of the present invention,

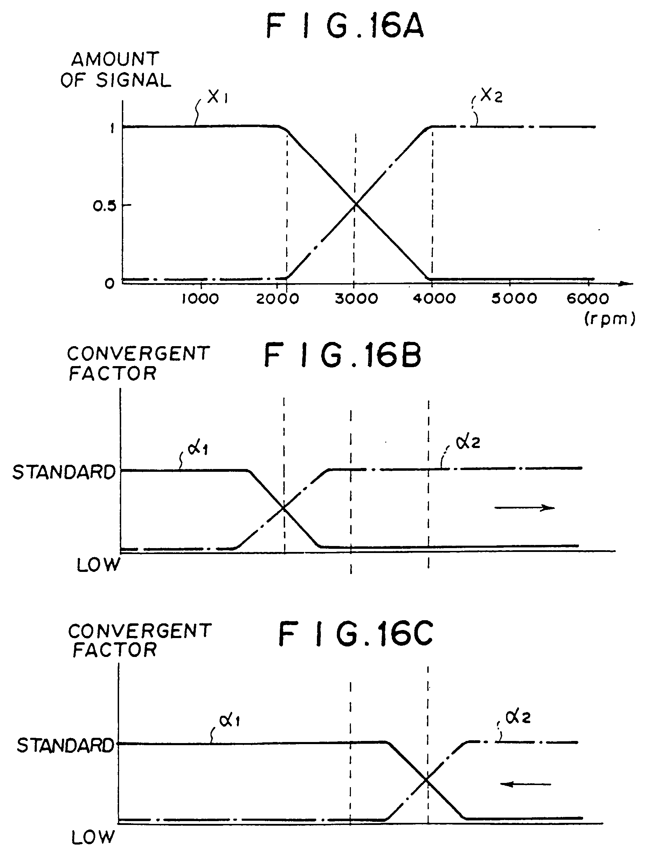

Figures 16A to 16C are views respectively showing the relation of the amounts of the reference signals to the engine speed, the relation of the values of the convergent factors to the engine speed when the engine speed increases from a low speed range to a high speed range, and the relation of the values of the convergent factors to the engine speed when the engine speed decreases from the high speed range to the low speed range in the case where the ratio changing means shown in Figure 15 changes the vibrator control ratio according to the engine speed, the broken lines in the drawings showing the correspondence therebteween,

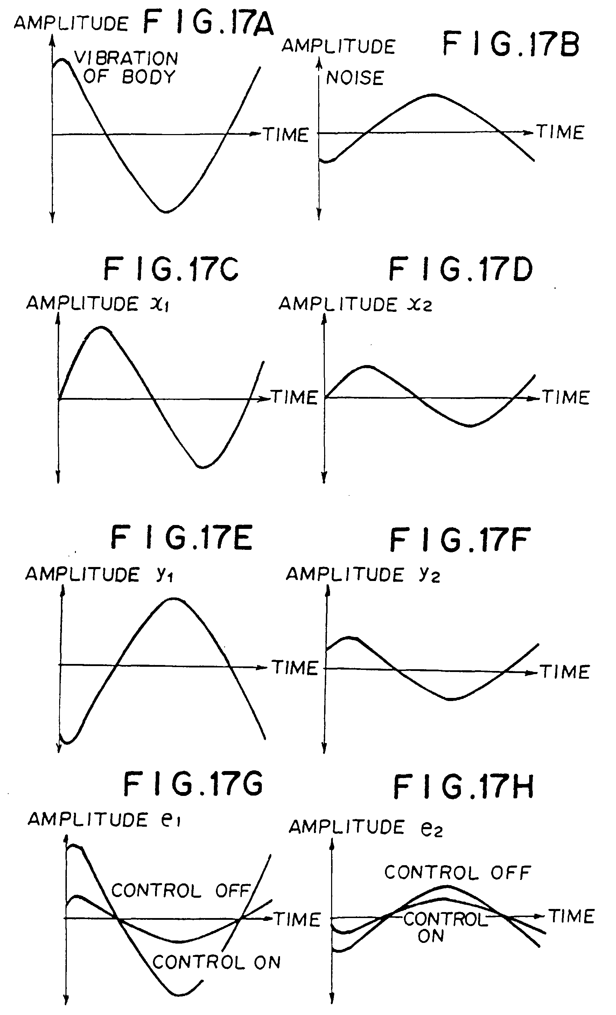

Figures 17A to 17H show damping of the vibration of the vehicle body and the noise in the cabin at 1000rpm when the vibrator control ratio is changed in the manner shown in Figure 16,

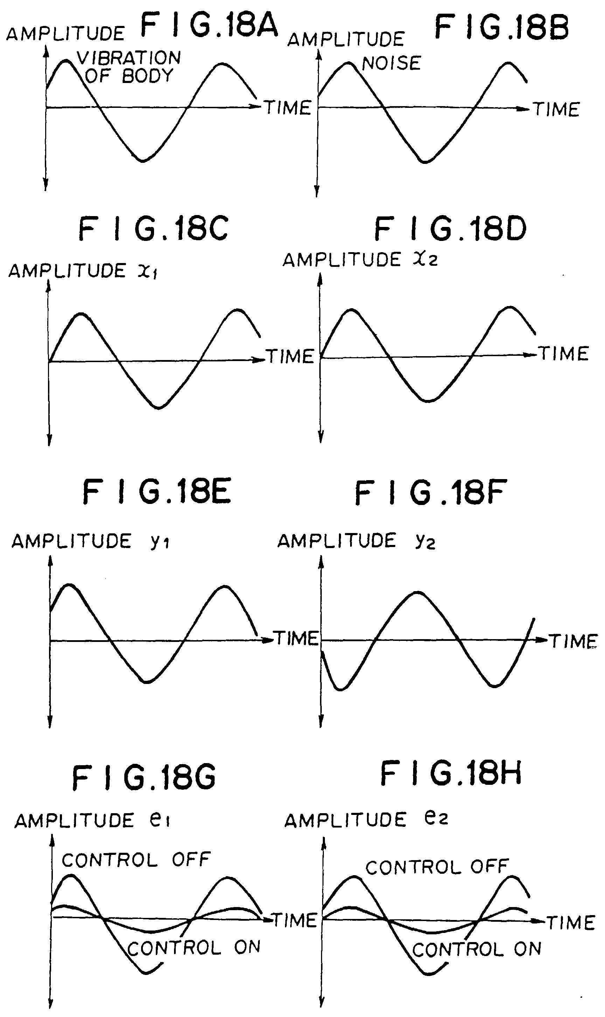

Figures 18A to 18H show damping of the vibration of the vehicle body and the noise in the cabin at 2500rpm when the vibrator control ratio is changed in the manner shown in Figure 16,

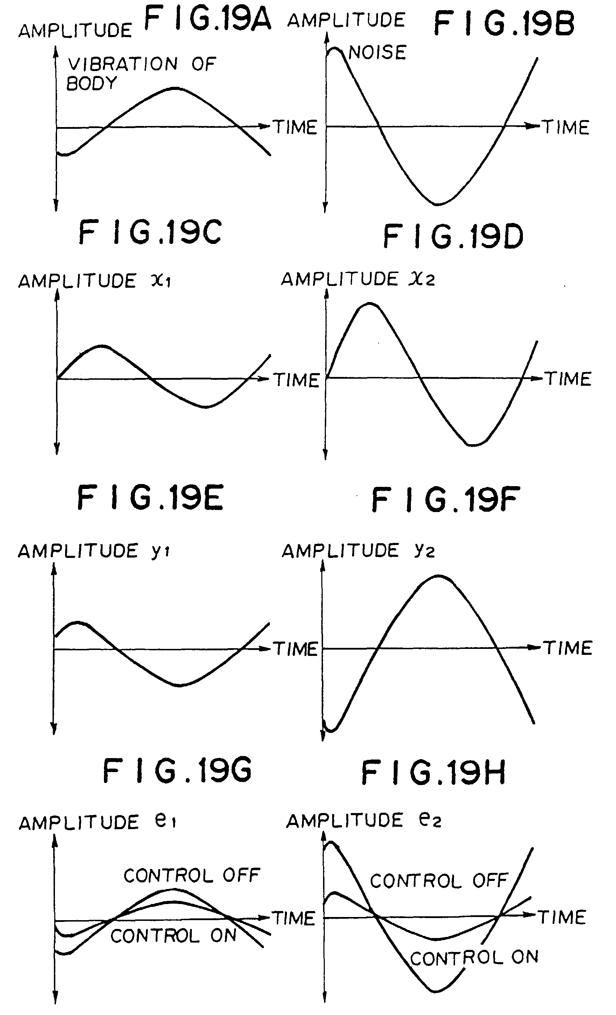

Figures 19A to 19H show damping of the vibration of the vehicle body and the noise in the cabin at 4000rpm when the vibrator control ratio is changed in the manner shown in Figure 16,

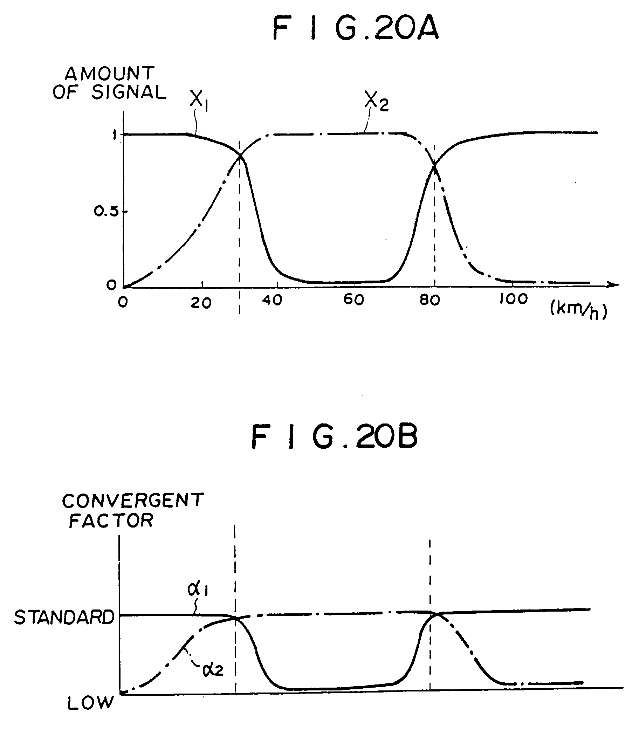

Figures 20A and 20B are views respectively showing the relation of the amounts of the reference signals to the vehicle speed and the relation of the convergent factors to the vehicle speed when the ratio changing means shown in Figure 15 changes the vibrator control ratio according to the vehicle speed, the broken lines in the drawings showing the correspondence therebteween,

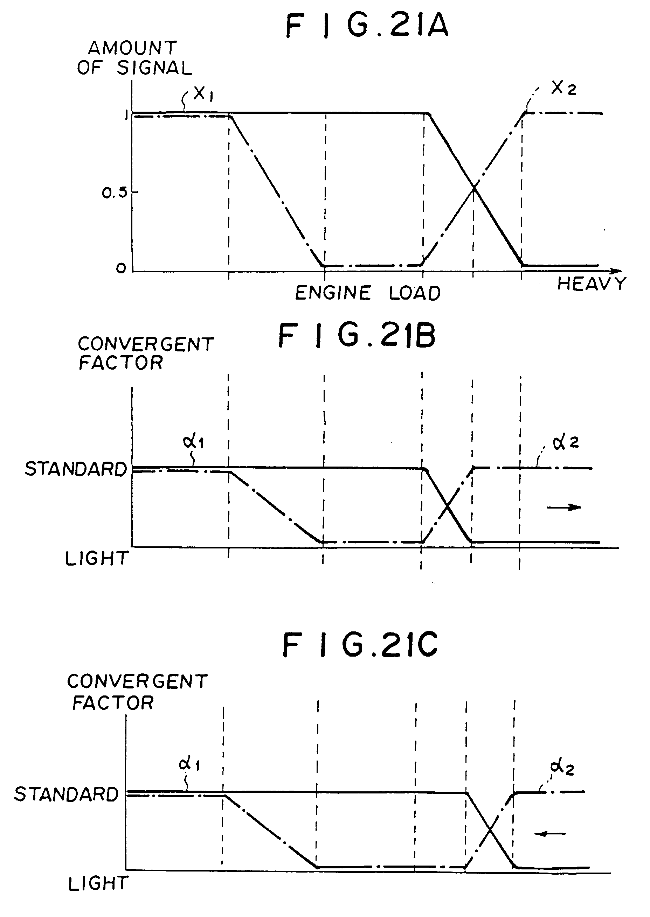

Figures 21A to 21C are views respectively view showing the relation of the amounts of the adjusted reference signals to the engine load, the relation of the values of the convergent factors to the engine load when the engine load increases, and the relation of the values of the convergent factors to the engine load when the engine load decreases in the case where the ratio changing means shown in Figure 15 changes the vibrator control ratio according to the engine load, the broken lines in the drawings showing the correspondence therebteween,

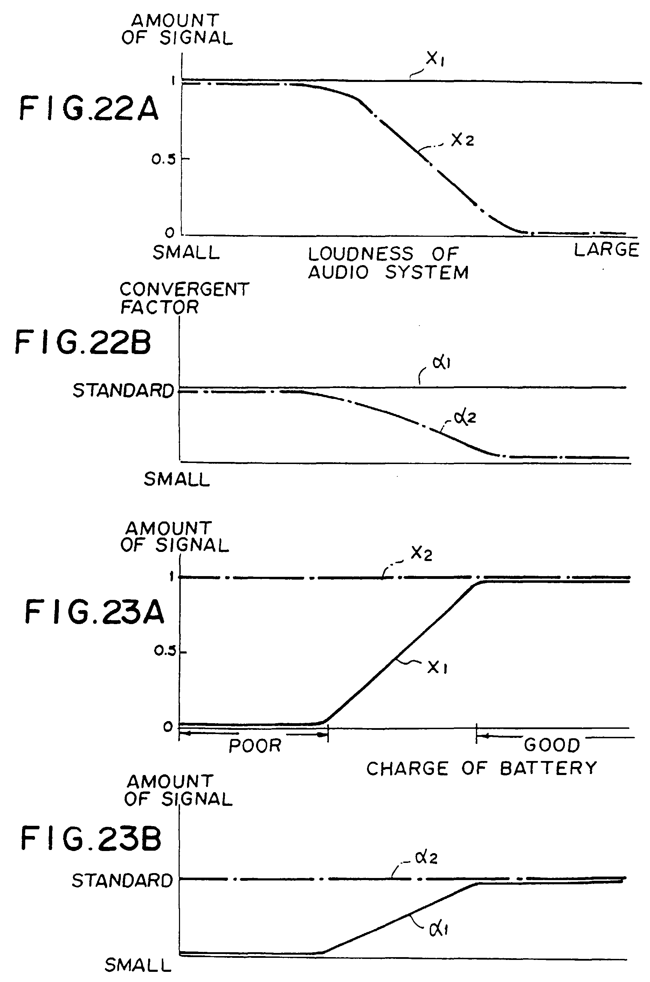

Figures 22A and 22B are views respectively showing the relation of the amounts of the reference signals to the loudness of the audio system and the relation of the convergent factors to the loudness of the audio system when the ratio changing means shown in Figure 15 changes the vibrator control ratio according to the loudness of the audio system,
Figures 23A and 23B are views respectively showing the relation of the amounts of the reference signals to the degree of charge of the battery and the relation of the convergent factors to the degree of charge of the battery when the ratio changing means shown in Figure 15 changes the vibrator control ratio according to the degree of charge of the battery,

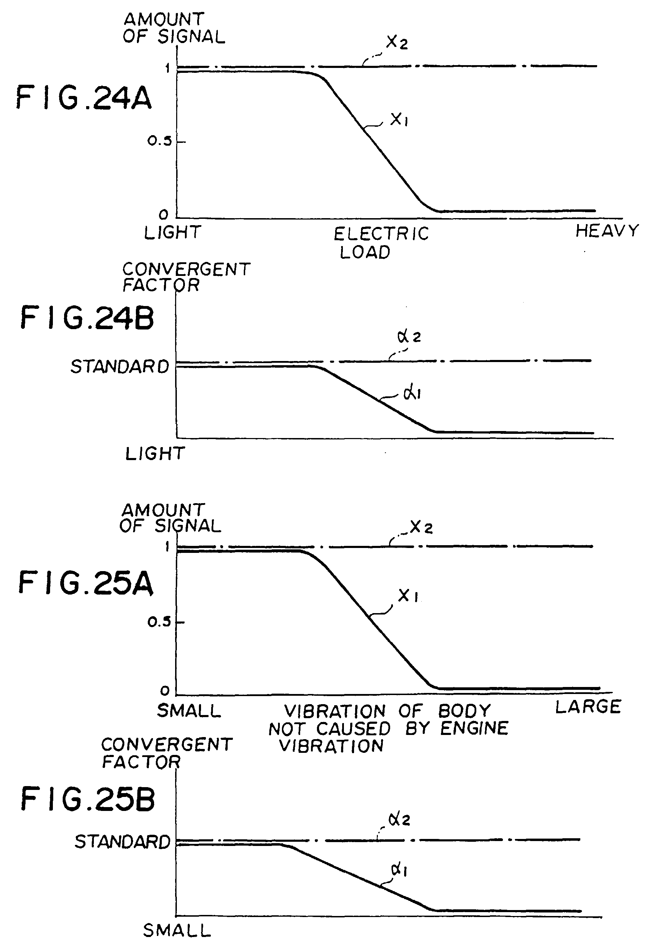

Figures 24A and 24B are views respectively showing the relation of the amounts of the reference signals to the electric load and the relation of the convergent factors to the electric load when the ratio changing means shown in Figure 15 changes the vibrator control ratio according to the electric load,
Figures 25A and 25B are views respectively showing the relation of the amounts of the reference signals to the vibration of the vehicle body not caused by the engine vibration and the relation of the convergent factors to the vibration of the vehicle body not caused by the engine vibration when the ratio changing means shown in Figure 15 changes the vibrator control ratio according to the vibration of the vehicle body not caused by the engine vibration,
Figure 26 is a schematic view showing the structure of the controller employed in the vibration damping system in accordance with a prior art.

### DESCRIPTION OF THE PREFERRED EMBODIMENTS

A first embodiment of the present invention will be described with reference to Figures 1 and 2, hereinbelow. In this embodiment, the elements analogous to those shown in Figure 26 are given the same reference numerals and will not be described in detail here.

In Figure 1, the vibration damping system of this embodiment comprises an acceleration sensor 32 (as a vibration sensor) which is disposed near the mounting portion of the engine E to the vehicle body 1 and detects the vibration of the vehicle body 1, a microphone 2 which is disposed near a seat in the cabin (preferably disposed near the ears of the passenger seated on the seats) and detects the vibration of air in the cabin, a vibrating engine mount 36 which supports the engine E relative to the vehicle body 1 and directly vibrates the vehicle body 1, a speaker 4 which is disposed in an instrument panel in the cabin and directly vibrates air in the cabin, and a controller C which drives the vibrating engine mount 36 and the speaker 4. Though in the illustrated embodiment, the acceleration sensor 32, the microphone 2, the vibrating engine mount 36 and the speaker 4 are each one in number, they may be plural in number.

As shown in Figure 2, the controller C comprises a reference signal generating means 8 which generates a reference signal x relating to the vibration of the engine E on the basis of an ignition pulse signal w generated by an ignition coil 24, attenuators 40a and 40b which attenuates the reference signal x input from the reference signal generating means 8 by a predetermined amount, a drive control means 6 which generates drive signals y₁ and y₂ for driving the vibrating engine mount 36 and the speaker 4 on the basis of the adjusted reference signals x₁ and x₂ output from the attenuators 40a and 40b, and a ratio changing means 42 which changes the attenuation rate of the reference signal x by the attenuators 40a and 40b and the control ratio of the vibrating engine mount 36 and the speaker 4 by the drive control means 6 according to the condition of a predetermined factor J. The drive control means 6 comprises adaptive filters F₁ and F₂ which adjust the phase and the amplitude of the adjusted reference signals x₁ and x₂ and an adaptive algorithm section 10 which adjusts the adaptive filters F₁ and F₂ so that the detecting signals e₁ to e₂ respectively input from the acceleration sensor 32 and the microphones 2 are minimized. In this embodiment, Least Mean Square Method is employed as the adaptive algorithm for adjusting the adaptive filters F₁ and F₂ and for this purpose, the drive control means 6 is provided with digital filters H°_{LM} (L standing for 1, 2 and M standing for 1, 2) which are modeled on the transmission properties between the vibrating engine mount 36 and the acceleration sensor 32 and between the speaker 4 and the microphone 2. Further the controller C has therein an amplifier 12 which amplifies the reference signal x, A/D convertors 14 which convert the adjusted reference signals x₁ and x₂ to digital signals, D/A convertors 20 which convert the drive signals y₁ and y₂ to analog signals, low-pass filters 44, amplifiers 22, amplifiers 16 which amplify the detecting signals e₁ and e₂, low-pass filters 46, and A/D convertors 18 which convert the detecting signals e₁ and e₂ passing through the low-pass filters 46 to digital signals.

In this embodiment, the ratio changing means 42 changes the vibrator control ratio by changing the input frequencies at which the detecting signals e₁ and e₂ from the acceleration sensor 32 and the microphone 2 are input into the drive control means 6 according to the condition of a predetermined factor J thereby changing the ratio of the part of the operational power of the drive control means 6 allotted to the control of the vibrating engine mount 36 to that allotted to the control of the speaker 4. Change of the vibrator control ratio by the ratio changing means 42 for various factors will be described, hereinbelow.

The case where the predetermined factor J is the engine speed, that is, the case where the ratio changing means 42 changes the vibrator control ratio according to the engine speed will be first described. Figures 3A and 3B respecively show the relation of the input frequencies of the detecting signals e₁ and e₂ to the engine speed and the relation of the amount of the adjusted reference signals x₁ and x₂ input into the drive control means to the engine speed.

Generally the level of vibration of the solid elements caused by vibration of the power unit is higher than that of air in the cabin when the engine speed is low and lower than the same when the engine speed is high.

As shown in Figures 3A and 3B, when the engine speed is in the low engine speed range, the ratio changing means 42 increases the input frequency of the detecting signal e₁ from the acceleration sensor 32 at which the detecting signal e₁ is input into the drive control means 6 in a predetermined time interval and nullifies the input frequency of the detecting signal e₂ from the microphone 2. Since the drive control means 6 performs calculation for updating the factor of the adaptive filters F₁ and F₂ according to the input frequencies of the detecting signals e₁ and e₂, all the operational power of the drive control means 6 is allotted to the control of the vibrating engine mount 36 when the input frequency of the detecting signal e₁ from the acceleration sensor 32 is increased and the input frequency of the detecting signal e₂ from the microphone 2 is nullified.

When the engine speed is in the middle engine speed range, the ratio changing means 42 reduces the input frequency of the detecting signal e₁ from the acceleration sensor 32 as the engine speed increases and increases the input frequency of the detecting signal e₂ from the microphone 2 as the engine speed increases. At the engine speed where the input frequencies of the detecting signals e₁ and e₂ are equal to each other, the operational power of the drive control means 6 is uniformly allotted to the control of the vibrating engine mount 36 and the control of the speaker 4.

When the engine speed is in the high engine speed range, the ratio changing means 42 nullifies the input frequency of the detecting signal e₁ from the acceleration sensor 32 and increases the input frequency of the detecting signal e₂ from the microphone 2. In this case, all the operational power of the drive control means 6 is allotted to the control of the speaker 4.

In addition to change of the input frequencies of the detecting signals e₁ and e₂, the ratio changing means 42 causes the attenuators 40a and 40b to increase the amount of the adjusted reference signal x₁ input into the adaptive filter F₁ (the reference signal x output from the amplifier 12 is input into the filter F₁ as it is without attenuation) and nullify the adjusted reference signal x₂ input into the adaptive filter F₂ in the low engine speed range, to gradually reduce the amount of the adjusted reference signal x₁ as the engine speed increases and gradually increase the adjusted reference signal x₂ as the engine speed increases in the middle engine speed range, and to nullify the adjusted reference signal x₁ and increase the amount of the adjusted reference signal x₂ in the high engine speed range.

The vibration damping system of this embodiment having the ratio changing means 42 which changes the input frequencies of the detecting signals e₁ and e₂ and amounts of the adjusted reference signals x₁ and x₂ input into the adaptive filters F₁ and F₂ in the manner described above operates as follows.

The acceleration sensor 32 shown in Figures 1 and 2 detects the vibration of the vehicle body 1 and outputs the detecting signal e₁ and the microphone 2 detects the vibration of air in the cabin (noise in the cabin) and outputs the detecting signal e₂. The detecting signals e₁ and e₂ are input into the drive control means 6 through the ratio changing means 42 which changes the input frequencies of the detecting signals e₁ and e₂ to the drive control means 6 according to the engine speed as described above.

When the engine speed is in the low engine speed range, the input frequency of the detecting signal e₁ is increased and the input frequency of the detecting signal e₂ is nullified. Since the drive control means 6 updates the factors of the adaptive filters F₁ and F₂ so that the signal levels are minimized each time the detecting signals e₁ and e₂ are input, the factor of the adaptive filter F₂ is not updated though the factor of the adaptive filter F₁ is updated and the signal level of the detecting signal e₁ is minimized. Whereas since the ratio changing means 42 increases the amount of the adjusted reference signal x₁ input into the adaptive filter F₁ and nullifies the amount of the adjusted reference signal x₂ input into the adaptive filter F₂ in the low engine speed range, no adjusted reference signal x₂ is input into the adaptive filter F₂ though the adjusted reference signals x₁ are successively input into the adaptive filter F₁. Accordingly the drive signals y₁ are successively generated to drive the vibrating engine mount 36 but no drive signal y₂ is generated and the speaker 4 is not driven. In this manner, when the engine speed is in the low engine speed range, damping of the vibration of the vehicle body 1 is preferentially effected and damping of the noise in the cabin is not effected. With this arrangement, in the low engine speed range where the vibration of the vehicle body 1 bothers the passengers more than the noise in the cabin, the vibration of the vehicle body 1 can be effectively damped well following the fluctuation thereof. Further since the input frequency of the detecting signal e₂ is nullified though the input frequency of the detecting signal e₁ is increased, the operational load on the drive control means 6 is not increased. Further since the speaker 4 driving of which will be almost useless in the low engine speed range is not driven, consumption of electric power can be suppressed.

On the other hand, in the high engine speed range where the noise in the cabin bothers the passengers more than the vibration of the vehicle body 1, the input frequency of the detecting signal e₂ is increased and the input frequency of the detecting signal e₁ is nullified, whereby the noise in the cabin can be effectively damped without increasing the operational load on the drive control means 6 and consumption of electric power can be suppressed by not driving the vibrating engine mount 36, driving of which will be almost useless in the high engine speed range.

In the lower side of the middle engine speed range, the vibration of the vehicle body 1 is damped in preference to the noise in the cabin and the degree of the preference is increased toward the low engine speed range, while in the higher side of the middle engine speed range, the noise in the cabin is damped in preference to the vibration of the vehicle body 1 and the degree of the preference is increased toward the high engine speed range. Also in the middle engine speed range, the vibration which more bothers the passengers is effectively damped without increasing the operational load on the drive control means 6.

The case where the predetermined factor J is the vehicle speed, that is, the case where the ratio changing means 42 changes the vibrator control ratio according to the vehicle speed will be described, hereinbelow. Figures 4A and 4B respecively show the relation of the input frequencies of the detecting signals e₁ and e₂ to the vehicle speed and the relation of the amount of the adjusted reference signals x₁ and x₂ input into the drive control means 6 to the vehicle speed when the ratio changing means 42 changes the vibrator control ratio according to the vehicle speed.

Generally the level of vibration of the solid elements caused by vibration of the power unit is higher than that of air in the cabin when the vehicle speed is in a low speed range and lower than the same when the vehicle speed is in a high speed range. Further when the vehicle speed is in a highest speed range, the level of vibration of air due to external disturbances rather than to vibration of the power unit such as road noise, wind noise and the like prevails.

As shown in Figures 4A and 4B, when the vehicle speed is in the low speed range, the ratio changing means 42 increases the input frequency of the detecting signal e₁ from the acceleration sensor 32 and nullifies the input frequency of the detecting signal e₂ from the microphone 2, thereby allotting all the operational power of the drive control means 6 to the control of the vibrating engine mount 36.

When the vehicle speed is in the high speed range, the ratio changing means 42 nullifies the input frequency of the detecting signal e₁ from the acceleration sensor 32 and increases the input frequency of the detecting signal e₂ from the microphone 2, thereby allotting all the operational power of the drive control means 6 to the control of the speaker 4.

When the vehicle speed is in the highest speed range, the ratio changing means 42 increases the input frequency of the detecting signal e₁ from the acceleration sensor 32 and nullifies the input frequency of the detecting signal e₂ from the microphone 2, thereby allotting all the operational power of the drive control means 6 to the control of the vibrating engine mount 36.

In addition to change of the input frequencies of the detecting signals e₁ and e₂, the ratio changing means 42 causes the attenuators 40a and 40b to increase the amount of the adjusted reference signal x₁ input into the adaptive filter F₁ and nullify the adjusted reference signal x₂ input into the adaptive filter F₂ in the low vehicle speed range, to nullify the adjusted reference signal x₁ and increase the amount of the adjusted reference signal x₂ in the high vehicle speed range, and to increase the amount of the adjusted reference signal x₁ input into the adaptive filter F₁ and nullify the adjusted reference signal x₂ input into the adaptive filter F₂ in the highest vehicle speed range.

In this embodiment, when the vehicle speed is in the low speed range, damping of the vibration of the vehicle body 1 is preferentially effected and damping of the noise in the cabin is not effected. With this arrangement, in the low vehicle speed range where the vibration of the vehicle body 1 bothers the passengers more than the noise in the cabin, the vibration of the vehicle body 1 can be effectively damped well following the fluctuation thereof. Further since the input frequency of the detecting signal e₂ is nullified though the input frequency of the detecting signal e₁ is increased, the operational load on the drive control means 6 is not increased. Further since the speaker 4 driving of which will be almost useless in the low vehicle speed range is not driven, consumption of electric power can be suppressed.

On the other hand, in the high vehicle speed range where the noise in the cabin bothers the passengers more than the vibration of the vehicle body 1, the input frequency of the detecting signal e₂ is increased and the input frequency of the detecting signal e₁ is nullified, whereby the noise in the cabin can be effectively damped without increasing the operational load on the drive control means 6 and consumption of electric power can be suppressed by not driving the vibrating engine mount 36, driving of which will be almost useless in the high vehicle speed range.

In the highest vehicle speed range, since the level of noise such as road noise, wind noise or the like which is not caused due to the vibration of the power unit increases and the microphone 2 detects the noise due to the vibration of the power unit together with the noise not due to the vibration of the power unit, satisfactory vibration damping effect cannot be obtained even if the speaker 4 is driven. On the other hand, since the acceleration sensor 32 does not detect the noise, the vibration of the vehicle body 1 can be satisfactorily damped by driving the vibrating engine mount 36. For this reason, in the highest vehicle speed range, damping of the vibration of the vehicle body 1 is preferentially effected. Thus in the highest vehicle speed range, the input frequency of the detecting signal e₁ is increased and the input frequency of the detecting signal e₂ is nullified, whereby the vibration of the vehicle body 1 can be effectively damped without increasing the operational load on the drive control means 6 and consumption of electric power can be suppressed by not driving the speaker 4, driving of which will be almost useless in the highest vehicle speed range.

The case where the predetermined factor J is the loudness of the audio system on the vehicle, that is, the case where the ratio changing means 42 changes the vibrator control ratio according to the loudness of the audio system on the vehicle will be described, hereinbelow. Figures 5A and 5B respecively show the relation of the input frequencies of the detecting signals e₁ and e₂ to the loudness of the audio system and the relation of the amount of the adjusted reference signals x₁ and x₂ input into the drive control means 6 to the loudness of the audio system when the ratio changing means 42 changes the vibrator control ratio according to the loudness of the audio system.

As shown in Figures 5A and 5B, when the loudness of the audio system is higher than a predetermined level, the ratio changing means 42 increases the input frequency of the detecting signal e₁ from the acceleration sensor 32 and nullifies the input frequency of the detecting signal e₂ from the microphone 2, thereby allotting all the operational power of the drive control means 6 to the control of the vibrating engine mount 36.

In addition to change of the input frequencies of the detecting signals e₁ and e₂, the ratio changing means 42 causes the attenuators 40a and 40b to keep large the amount of the adjusted reference signal x₁ input into the adaptive filter F₁ irrespective of the loudness of the audio system and nullify the adjusted reference signal x₂ input into the adaptive filter F₂ when the loudness of the audio system becomes higher than the predetermined level.

When the loudness of the audio system exceeds the predetermined level, the microphone 2 detects the noise due to the vibration of the power unit together with the sound of the audio system, satisfactory vibration damping effect cannot be obtained even if the speaker 4 is driven. On the other hand, since the acceleration sensor 32 does not detect the sound of the audio system, the vibration of the vehicle body 1 can be satisfactorily damped by driving the vibrating engine mount 36.

For this reason, damping of the vibration of the vehicle body 1 is preferentially effected when the loudness of the audio system exceeds the predetermined level, whereby the vibration of the vehicle body 1 can be effectively damped without increasing the operational load on the drive control means 6 and consumption of electric power can be suppressed by not driving the speaker 4, driving of which will be almost useless when the loudness of the audio system is high.

The case where the predetermined factor J is the degree of opening of the window, that is, the case where the ratio changing means 42 changes the vibrator control ratio according to the degree of opening of the window will be described, hereinbelow. Figures 6A and 6B respecively show the relation of the input frequencies of the detecting signals e₁ and e₂ to the degree of opening of the window and the relation of the amount of the adjusted reference signals x₁ and x₂ input into the drive control means 6 to the degree of opening of the window when the ratio changing means 42 changes the vibrator control ratio according to the degree of opening of the window.

As shown in Figures 6A and 6B, when the degree of opening of the window is higher than a predetermined value, the ratio changing means 42 increases the input frequency of the detecting signal e₁ from the acceleration sensor 32 and nullifies the input frequency of the detecting signal e₂ from the microphone 2, thereby allotting all the operational power of the drive control means 6 to the control of the vibrating engine mount 36.

In addition to change of the input frequencies of the detecting signals e₁ and e₂, the ratio changing means 42 causes the attenuators 40a and 40b to keep large the amount of the adjusted reference signal x₁ input into the adaptive filter F₁ irrespective of the degree of opening of the window and nullify the adjusted reference signal x₂ input into the adaptive filter F₂ when the degree of opening of the window becomes higher than the predetermined value.

When the degree of opening of the window exceeds the predetermined value, the microphone 2 detects the noise due to the vibration of the power unit together with the wind noise, satisfactory vibration damping effect cannot be obtained even if the speaker 4 is driven. On the other hand, since the acceleration sensor 32 does not detect the wind noise, the vibration of the vehicle body 1 can be satisfactorily damped by driving the vibrating engine mount 36.

For this reason, damping of the vibration of the vehicle body 1 is preferentially effected when the degree of opening of the window exceeds the predetermined value, whereby the vibration of the vehicle body 1 can be effectively damped without increasing the operational load on the drive control means 6 and consumption of electric power can be suppressed by not driving the speaker 4, driving of which will be almost useless when the window is opened wide.

The case where the predetermined factor J is the number of the passengers, that is, the case where the ratio changing means 42 changes the vibrator control ratio according to the number of the passengers will be described, hereinbelow. Figures 7A and 7B respecively show the relation of the input frequencies of the detecting signals e₁ and e₂ to the number of the passengers and the relation of the amount of the adjusted reference signals x₁ and x₂ input into the drive control means 6 to the number of the passengers when the ratio changing means 42 changes the vibrator control ratio according to the number of the passengers.

As shown in Figures 7A and 7B, when the number of the passengers is larger than a predetermined value, the ratio changing means 42 nullifies the input frequency of the detecting signal e₁ from the acceleration sensor 32 and increases the input frequency of the detecting signal e₂ from the microphone 2, thereby allotting all the operational power of the drive control means 6 to the control of the speaker 4.

In addition to change of the input frequencies of the detecting signals e₁ and e₂, the ratio changing means 42 causes the attenuators 40a and 40b to keep large the amount of the adjusted reference signal x₂ input into the adaptive filter F₂ irrespective of the number of the passengers and nullify the adjusted reference signal x₁ input into the adaptive filter F₁ when the number of the passengers is larger than the predetermined value.

When the number of the passengers is large, the total weight of the vehicle increases and the level of the vibration of the vehicle body 1 due to the vibration of the engine E does not so increase even if the vibration of the engine E increases to a high level. On the other hand, the noise in the cabin caused due to the vibration of the engine E more disturbs passenger's conversation as the number of the passengers increases.

For this reason, damping of the noise in the cabin is preferentially effected when the number of the passengers exceeds the predetermined value, whereby the noise in the cabin can be effectively damped without increasing the operational load on the drive control means 6 and consumption of electric power can be suppressed by not driving the vibrating engine mount 36, driving of which will be almost useless when the number of the passengers is large.

The case where the predetermined factor J is the degree of acceleration and deceleration of the vehicle, that is, the case where the ratio changing means 42 changes the vibrator control ratio according to the degree of acceleration and deceleration of the vehicle will be described, hereinbelow. Figures 8A and 8B respecively show the relation of the input frequencies of the detecting signals e₁ and e₂ to the degree of acceleration and deceleration of the vehicle and the relation of the amount of the adjusted reference signals x₁ and x₂ input into the drive control means 6 to the degree of acceleration and deceleration of the vehicle when the ratio changing means 42 changes the vibrator control ratio according to the degree of acceleration and deceleration of the vehicle.

As shown in Figures 8A and 8B, when the degree of acceleration and deceleration of the vehicle is higher than a predetermined value, the ratio changing means 42 increases the input frequency of the detecting signal e₁ from the acceleration sensor 32 and nullifies the input frequency of the detecting signal e₂ from the microphone 2, thereby allotting all the operational power of the drive control means 6 to the control of the vibrating engine mount 36.

In addition to change of the input frequencies of the detecting signals e₁ and e₂, the ratio changing means 42 causes the attenuators 40a and 40b to keep large the amount of the adjusted reference signal x₁ input into the adaptive filter F₁ irrespective of the degree of acceleration and deceleration of the vehicle and nullify the adjusted reference signal x₂ input into the adaptive filter F₂ when the degree of acceleration and deceleration of the vehicle becomes higher than the predetermined value.

When the degree of acceleration and deceleration of the vehicle exceeds the predetermined value, the level of the engine vibration increases to increase the vibration of the vehicle body 1 and the noise in the cabin. During acceleration or deceleration of the vehicle, vibration of the vehicle body 1 generally bothers the passengers but the noise in the cabin generally does not bother the passengers. For example, sound of the engine during acceleration sometimes sounds comfortable for the passengers.

For this reason, damping of the vibration of the vehicle body 1 is preferentially effected when the degree of acceleration and deceleration of the vehicle exceeds the predetermined value, whereby the vibration of the vehicle body 1 can be effectively damped without increasing the operational load on the drive control means 6 and consumption of electric power can be suppressed by not driving the speaker 4, driving of which will be almost useless when the degree of acceleration and deceleration of the vehicle is large.

The case where the predetermined factor J is the air flow of the air-conditioner, that is, the case where the ratio changing means 42 changes the vibrator control ratio according to the air flow of the air-conditioner will be described, hereinbelow. Figures 9A and 9B respecively show the relation of the input frequencies of the detecting signals e₁ and e₂ to the air flow of the air-conditioner and the relation of the amount of the adjusted reference signals x₁ and x₂ input into the drive control means 6 to the air flow of the air-conditioner when the ratio changing means 42 changes the vibrator control ratio according to the air flow of the air-conditioner.

As shown in Figures 9A and 9B, when the air flow of the air-conditioner is larger than a predetermined value, the ratio changing means 42 increases the input frequency of the detecting signal e₁ from the acceleration sensor 32 and nullifies the input frequency of the detecting signal e₂ from the microphone 2, thereby allotting all the operational power of the drive control means 6 to the control of the vibrating engine mount 36.

In addition to change of the input frequencies of the detecting signals e₁ and e₂, the ratio changing means 42 causes the attenuators 40a and 40b to keep large the amount of the adjusted reference signal x₁ input into the adaptive filter F₁ irrespective of the air flow of the air-conditioner and nullify the adjusted reference signal x₂ input into the adaptive filter F₂ when the air flow of the air-conditioner becomes larger than the predetermined value.

When the air flow of the air-conditioner exceeds the predetermined value, the microphone 2 detects the noise due to the vibration of the power unit together with the noise of the air-conditioner, satisfactory vibration damping effect cannot be obtained even if the speaker 4 is driven. On the other hand, since the acceleration sensor 32 does not detect the noise of the air-conditioner, the vibration of the vehicle body 1 can be satisfactorily damped by driving the vibrating engine mount 36.

For this reason, damping of the vibration of the vehicle body 1 is preferentially effected when the air flow of the air-conditioner exceeds the predetermined value, whereby the vibration of the vehicle body 1 can be effectively damped without increasing the operational load on the drive control means 6 and consumption of electric power can be suppressed by not driving the speaker 4, driving of which will be almost useless when the air flow of the air-conditioner is large.

The case where the predetermined factor J is whether the vibrators are in the normal condition or in an abnormal condition, that is, the case where the ratio changing means 42 changes the vibrator control ratio according to whether the vibrating engine mount 36 and the speaker 4 are in the normal condition will be described, hereinbelow. Figure 10 is a flow chart for illustrating the operation of the ratio changing means 42 in changing the vibrator control ratio in this case.

In Figure 10, the ratio changing means 42 first determines whether the speaker 4 is in an abnormal condition. (step S1) When it is determined that the speaker 4 is in an abnormal condition, the ratio changing means 42 nullifies the input frequency of the detecting signal e₂ from the microphone 2 and the adjusted reference signal x₂ input into the adaptive filter F₂. (step S2) After step S2 or when it is determined that the speaker 4 is not in an abnormal condition, the ratio changing means 42 determines whether the vibrating engine mount 36 is in an abnormal condition. (step S3) When it is determined that the vibrating engine mount 36 is in an abnormal condition, the ratio changing means 42 nullifies the input frequency of the detecting signal e₁ from the acceleration sensor 32 and the adjusted reference signal x₁ input into the adaptive filter F₁. (step S4) After step S4 or when it is determined that the vibrating engine mount 36 is not in an abnormal condition, the ratio changing means 42 returns.

When the speaker 4 is in an abnormal condition, driving the speaker 4 to damp the noise in the cabin cannot result in expected noise damping effect but may result in increase in noise. Similarly when the vibrating engine mount 36 is in an abnormal condition, driving the vibrating engine mount 36 to damp the vibration of the vehicle body 1 cannot result in expected vibration damping effect but may result in increase in vibration of the vehicle body 1.

Thus in this example, the abnormal vibrator(s) is not driven and accordingly, vibration of air and/or solid elements can be prevented from being increased by driving abnormal vibrator(s). Further consumption of electric power can be suppressed by not driving abnormal vibrator(s). Further since when one of the speaker 4 and the vibrating engine mount 36 is in the abnormal state, all the operational power of the drive control means 6 is allotted to the control of the other, one of the noise in the cabin and the vibration of the vehicle body 1 can be effectively damped.

When only the vibrating engine mount 36 is in an abnormal condition, the ratio changing means 42 may maximize the input frequency of the detecting signal e₂ from the speaker 4 in addition to nullifying the input frequency of the detecting signal e₁ from the acceleration sensor 32 and the adjusted reference signal x₁ input into the adaptive filter F₁. When only the speaker 4 is in an abnormal condition, the ratio changing means 42 may maximize the input frequency of the detecting signal e₁ from the acceleration sensor 32 in addition to nullifying the input frequency of the detecting signal e₂ from the speaker 4 and the adjusted reference signal x₂ input into the adaptive filter F₂.

The case where the predetermined factor J is the noise level in the detecting signals e₁ and e₂, that is, the case where the ratio changing means 42 changes the vibrator control ratio according to the noise level in the detecting signals e₁ and e₂ will be described, hereinbelow. Figure 11 is a flow chart for illustrating the operation of the ratio changing means 42 in changing the vibrator control ratio in this case.

In Figure 11, the ratio changing means 42 first determines whether the noise level in the detecting signal e₂ is higher than a predetermined level. (step T1) When it is determined that the noise level in the detecting signal e₂ is higher than the predetermined level, the ratio changing means 42 nullifies the input frequency of the detecting signal e₂ from the microphone 2 and the adjusted reference signal x₂ input into the adaptive filter F₂. (step T2) After step T2 or when it is determined that the noise level in the detecting signal e₂ is not higher than the predetermined level, the ratio changing means 42 determines whether the noise level in the detecting signal e₁ is higher than a predetermined level. (step T3) When it is determined that the noise level in the detecting signal e₁ is higher than the predetermined level, the ratio changing means 42 nullifies the input frequency of the detecting signal e₁ from the acceleration sensor 32 and the adjusted reference signal x₁ input into the adaptive filter F₁. (step T4) After step T4 or when it is determined that the noise level in the detecting signal e₁ is not higher than the predetermined level, the ratio changing means 42 returns.

When the noise level in the detecting signal e₂ from the microphone 2 is high, driving the speaker 4 to damp the noise in the cabin cannot result in expected noise damping effect but may result in increase in noise. Similarly when the noise level in the detecting signal e₁ from the acceleration sensor 32 is high, driving the vibrating engine mount 36 to damp the vibration of the vehicle body 1 cannot result in expected vibration damping effect but may result in increase in vibration of the vehicle body 1.

Thus in this example, the detecting signal whose noise level is high is not input and accordingly, vibration of air and/or solid elements can be prevented from being increased by driving the vibrating engine mount 36 and/or speaker 4 on the basis of detecting signal including a large amount of noise. Further consumption of electric power can be suppressed by not driving the vibrator(s) which is controlled on the basis of detecting signal including a large amount of noise. Further since when one of the detecting signals e₁ and e₂ includes a large amount of noise, all the operational power of the drive control means 6 is allotted to the control of the vibrator which is controlled on the basis of the other detecting signals, one of the noise in the cabin and the vibration of the vehicle body 1 can be effectively damped.

When only the detecting signal e₁ from the acceleration sensor 32 includes a large amount of noise, the ratio changing means 42 may maximize the input frequency of the detecting signal e₂ from the speaker 4 in addition to nullifying the input frequency of the detecting signal e₁ from the acceleration sensor 32 and the adjusted reference signal x₁ input into the adaptive filter F₁. When only the detecting signal e₂ from the speaker 4 includes a large amount of noise, the ratio changing means 42 may maximize the input frequency of the detecting signal e₁ from the acceleration sensor 32 in addition to nullifying the input frequency of the detecting signal e₂ from the speaker 4 and the adjusted reference signal x₂ input into the adaptive filter F₂.

The case where the predetermined factor J is the vibration of the engine E, that is, the case where the ratio changing means 42 changes the vibrator control ratio according to the vibration of the engine E will be described, hereinbelow. Figure 12 is a flow chart for illustrating the operation of the ratio changing means 42 in changing the vibrator control ratio in this case.

In Figure 12, the ratio changing means 42 first determines whether the amplitude of the low frequency component of the vibration of the engine E is larger than a predetermined value. (step U1) When it is determined that the amplitude of the low frequency component of the vibration of the engine E is larger than the predetermined value, the ratio changing means 42 determines whether the amplitude of the high frequency component of the vibration of the engine E is larger than a predetermined value. (step U2) When it is determined in step U2 that the amplitude of the high frequency component of the vibration of the engine E is not larger than the predetermined value, the ratio changing means 42 nullifies the input frequency of the detecting signal e₂ from the microphone 2 and the adjusted reference signal x₂ input into the adaptive filter F₂ and at the same time increases the input frequency of the detecting signal e₁ from the acceleration sensor 32. (step U3) When it is determined in step U1 that the amplitude of the low frequency component of the vibration of the engine E is not larger than the predetermined value, the ratio changing means 42 determines whether the amplitude of the high frequency component of the vibration of the engine E is larger than a predetermined value. (step U4) When it is determined in step U4 that the amplitude of the high frequency component of the vibration of the engine E is larger than the predetermined value, the ratio changing means 42 nullifies the input frequency of the detecting signal e₁ from the acceleration sensor 32 and the adjusted reference signal x₁ input into the adaptive filter F₁ and at the same time increases the input frequency of the detecting signal e₂ from the microphone 2. (step U5) When it is determined in step U2 that the amplitude of the high frequency component of the vibration of the engine E is larger than the predetermined value or when it is determined in step U4 that the amplitude of the high frequency component of the vibration of the engine E is not larger than the predetermined value, the ratio changing means 42 returns without changing the input frequencies of the detecting signals e₁ and e₂ and the amounts of the adjusted reference signals x₁ and x₂.

The vibration of the vehicle body 1 due to the vibration of the engine E increases when the amplitude of the low frequency component of the vibration of the engine E is large, and the noise in the cabin due to the vibration of the engine E increases when the amplitude of the high frequency component of the vibration of the engine E is large.

In this example, when the amplitude of the low frequency component is large and the amplitude of the high frequency component is small, damping of the vibration of the vehicle body 1 is preferentially effected and damping of the noise in the cabin is not effected. With this arrangement, in the case the amplitude of the low frequency component large with the amplitude of the high frequency component being small where the vibration of the vehicle body 1 bothers the passengers more than the noise in the cabin, the vibration of the vehicle body 1 can be effectively damped well following the fluctuation thereof. Further since the input frequency of the detecting signal e₂ is nullified though the input frequency of the detecting signal e₁ is increased, the operational load on the drive control means 6 is not increased. Further since the speaker 4 driving of which will be almost useless in this case is not driven, consumption of electric power can be suppressed.

On the other hand, when the amplitude of the high frequency component is large and the amplitude of the low frequency component is small, damping of the noise in the cabin is preferentially effected and damping of the vibration of the vehicle body 1 is not effected. With this arrangement, in the case the amplitude of the high frequency component large with the amplitude of the low frequency component being small where the noise in the cabin bothers the passengers more than the vibration of the vehicle body 1, the noise in the cabin can be effectively damped well following the fluctuation thereof without increasing the operational load on the drive control means 6. Further since the vibrating engine mount 36 driving of which will be almost useless in this case is not driven, consumption of electric power can be suppressed.

Though, in the examples described above, the ratio changing means 42 automatically changes the vibrator control ratio according to the condition of the various factors J, the vibration damping system of the first embodiment may be modified so that the vibrator control ratio can be manually changed. An example of such a modification will be described, hereinbelow.

In this modification, a manual ratio setting means 70 shown in Figure 13 is provided. By operating the manual ratio setting means 70, the passenger can set the input frequencies of the detecting signals e₁ and e₂ in preference to the ratio changing means 42. The manual ratio setting means 70 is disposed in a position where the passenger can operate it inside the cabin, e.g., on an instrument panel, and has a control dial 70a for manually setting the input frequencies. That is, as the control dial 70a is rotated leftward, the input frequency of the detecting signal e₁ is increased and the input frequency of the detecting signal e₂ is reduced while when the control dial 70a is rotated rightward, the input frequency of the detecting signal e₁ is reduced and the input frequency of the detecting signal e₂ is increased as shown in Figure 14, whereby the vibrator control ratio can be manually changed according to the passenger's will.

Thus, by providing the manual ratio setting means 70, one of the vibration of the vehicle body 1 and the noise in the cabin which the passenger feels more bother some can be damped in preference to the other.

Figure 15 is a schematic view showing the structure of the controller employed in the vibration damping system in accordance with a second embodiment of the present invention. The vibration damping system of this embodiment is basically the same as the first embodiment, and accordingly the parts analogous to those in the first embodiment will be given the same reference numerals and will not be described in detail here.

As shown in Figure 15, the controller C comprises a reference signal generating means 8 which generates a reference signal x on the basis of an ignition pulse signal w generated by an ignition coil 24, a drive control means 6 which generates drive signals y₁ and y₂ for driving the vibrating engine mount 36 and the speaker 4. The drive control means 6 comprises adaptive filters F₁ and F₂ and an adaptive algorithm section 10 which adjusts the adaptive filters F₁ and F₂ so that the detecting signals e₁ to e₂ respectively input from the acceleration sensor 32 and the microphones 2 are minimized. In this embodiment, Least Mean Square Method is employed as the adaptive algorithm for adjusting the adaptive filters F₁ and F₂ and for this purpose, the drive control means 6 is provided with digital filters H°_{LM} (L standing for 1, 2 and M standing for 1, 2) which are modeled on the transmission properties between the vibrating engine mount 36 and the acceleration sensor 32 and between the speaker 4 and the microphone 2. Further the controller C has a ratio changing means 42 comprising a first convergent factor changing device 51 which changes a convergent factor α₁ for the detecting signal e₁ from the acceleration sensor 32, a second convergent factor changing device 52 which changes a convergent factor α₂ for the detecting signal e₂ from the microphone 2, attenuators 40a and 40b which attenuates the reference signal x input from the reference signal generating means 8 by a predetermined amount, and a ratio changing section 42a which changes the attenuation rate of the reference signal x by the attenuators 40a and 40b according to the condition of a predetermined factor J of the vehicle.

In this embodiment, the ratio changing means 42 changes the vibrator control ratio by changing the amounts of the adjusted reference signals x₁ and x₂ which are input into the drive control means 6 after passing through the attenuators 40a and 40b and the convergent factors α₁ and α₂ according to the condition of the predetermined factor J of the vehicle, thereby changing the ratio of the proportion of the output amount of the drive signal y₁ to the optimal amount of the same to the proportion of the output amount of the drive signal y₂ to the optimal amount of the same. The term "the optimal amount of the drive signal y₁" means the amount of the drive signal y₁ which causes the vibrating engine mount 36 to vibrate by an amount optimal to damp the vibration of the vehicle body 1 and which is output when the amount of the adjusted reference signal x₁ is of a standard value and at the same time the convergent factor α₁ is of a standard value. Similarly, the term "the optimal amount of the drive signal y₂" means the amount of the drive signal y₂ which causes the speaker 4 to vibrate by an amount optimal to damp the noise in the cabin and which is output when the amount of the adjusted reference signal x₂ is of a standard value and at the same time the convergent factor α₂ is of a standard value. Change of the vibrator control ratio by the ratio changing means 42 for various factors will be described, hereinbelow.

The case where the predetermined factor J is the engine speed, that is, the case where the ratio changing means 42 changes the vibrator control ratio according to the engine speed will be described. Figures 16A to 16C respecively show the relation of the amounts of the adjusted reference signals x₁ and x₂ to the engine speed, the relation of the values of the convergent factors α₁ and α₂ to the engine speed when the engine speed increases from a low speed range to a high speed range, and the relation of the values of the convergent factors α₁ and α₂ to the engine speed when the engine speed decreases from the high speed range to the low speed range in the case where the ratio changing means 42 changes the vibrator control ratio according to the engine speed. Figures 17A to 17H show damping of the vibration of the vehicle body 1 and the noise in the cabin at 1000rpm when the vibrator control ratio is changed in the manner shown in Figures 16A to 16C, wherein Figure 17A shows the change of the vibration of the vehicle body 1, Figure 17B shows the change of the noise in the cabin, Figure 17C shows the change of the amount of the adjusted reference signal x₁, Figure 17D shows the change of the amount of the adjusted reference signal x₂, Figure 17E shows the change of the amount of the drive signal y₁, Figure 17F shows the change of the amount of the drive signal y₂, Figure 17G shows the change of the amount of the detecting signal e₁, and Figure 17H shows the change of the amount of the detecting signal e₂. Figures 18A to 18H are the views similar to Figures 17A to 17H but at 2500rpm and Figures 19A to 19H are the views similar to Figures 17A to 17H but at 4000rpm.

As can be understood from Figures 17A and 17B, when the engine speed is in the low speed range (e.g., 1000rpm), the level of the vibration of the vehicle body 1 caused by the vibration of the engine E is high and the level of the noise in the cabin caused by the vibration of the engine E is low. Further as can be understood from Figures 18A and 18B, when the engine speed is in the middle speed range (e.g., 2500rpm), the level of the vibration of the vehicle body 1 caused by the vibration of the engine E is substantially equal to the level of the noise in the cabin caused by the vibration of the engine E. Further as can be understood from Figures 19A and 19B, when the engine speed is in the high speed range (e.g., 4000rpm), the level of the vibration of the vehicle body 1 caused by the vibration of the engine E is low and the level of the noise in the cabin caused by the vibration of the engine E is high.

As shown in Figures 16A to 16C, the ratio changing means 42 causes the attenuators 40a and 40b to increase the amount of the adjusted reference signal x₁ input into the adaptive filter F₁ to the standard value (equal to the amount of the reference signal x as it is output from the amplifier 12) and reduce the adjusted reference signal x₂ input into the adaptive filter F₂ near zero in the low engine speed range, to gradually reduce the amount of the adjusted reference signal x₁ as the engine speed increases and gradually increase the adjusted reference signal x₂ as the engine speed increases in the middle engine speed range, and to reduce the adjusted reference signal x₁ near zero and increase the amount of the adjusted reference signal x₂ to the standard value in the high engine speed range. At the same time, the ratio changing means 42 reduces the convergent factor α₂ for the detecting signal e₂ from the microphone 2 and sets the convergent factor α₁ for the detecting signal e₁ from the acceleration sensor 32 to the standard value (a value normally set taking into account the convergence to the optimal control point and the stability of control) in the low engine speed range, and the ratio changing means 42 sets the convergent factor α₂ for the detecting signal e₂ to the standard value and reduces the convergent factor α₁ for the detecting signal e₁ in the high engine speed range.

The vibration damping system of this embodiment having the ratio changing means 42 which changes the vibrator control ratio in the manner described above operates as follows.

The acceleration sensor 32 shown in Figure 15 detects the vibration of the vehicle body 1 and outputs the detecting signal e₁ and the microphone 2 detects the noise in the cabin and outputs the detecting signal e₂. The detecting signals e₁ and e₂ are input into the drive control means 6. The drive control means 6 performs calculation with calculation step widths according to the convergent factors α₁ and α₂ on the basis of the detecting signals e₁ and e₂ input and adjusts the adaptive filters F₁ and F₂.

When the engine speed is in the low engine speed range, the ratio changing means 42 sets the convergent factor α₁ to the standard value and the convergent factor α₂ to s small value as described above. Accordingly, though adjustment of the adaptive filter F₁ on the basis of the detecting signal e₁ is effected in the normal manner, adjustment of the adaptive filter F₂ on the basis of the detecting signal e₂ is less effected. That is, when the engine speed is in the low engine speed range, damping of the vibration of the vehicle body 1 is preferentially effected. Further since the ratio changing means 42 sets large the amount of the adjusted reference signal x₁ input into the adaptive filter F₁ and sets small the amount of the adjusted reference signal x₂ input into the adaptive filter F₂, the drive signal y₁ for the vibrating engine mount 36 is output in the optimal amount but the drive signal y₂ for the speaker 4 is output in an amount less than the optimal amount. (See Figures 17C and 17D) With this arrangement, the vibration of the vehicle body 1 at the acceleration sensor 32 is greatly damped but the noise in the cabin at the microphone 2 is not so damped in the low engine speed range as shown in Figures 17G and 17H. However since the vibration of the vehicle body 1 bothers the passengers more than the noise in the cabin in the low engine speed range and damping of the noise little serves to the passengers, electric power which would be consumed for driving the speaker 4 can be saved by the control described above.

When the engine speed is in the high engine speed range, the ratio changing means 42 sets the convergent factor α₂ to the standard value and the convergent factor α₁ to s small value as described above, whereby damping of the noise in the cabin is preferentially effected. Further the drive signal y₂ for the speaker 4 is output in the optimal amount but the drive signal y₁ for the vibrating engine mount 36 is output in an amount less than the optimal amount. (See Figures 19C and 19D) With this arrangement, the noise in the cabin at the microphone 2 is greatly damped but the vibration of the vehicle body 1 at the acceleration sensor 32 is not so damped in the high engine speed range as shown in Figures 19G and 19H. However since the noise in the cabin bothers the passengers more than the vibration of the vehicle body 1 in the high engine speed range and damping of the vibration of the vehicle body 1 little serves to the passengers, electric power which would be consumed for driving the vibrating engine mount 36 can be saved by the control described above.

In the middle engine speed range, the vibration of the vehicle body 1 is damped in preference to the noise in the cabin below the middle of the range near 2500rpm, and the noise in the cabin is damped in preference to the vibration of the vehicle body 1 over the middle of the range. At the engine speed near 2500rpm, the vibration of the vehicle body 1 and the noise in the cabin are damped substantially equally as can be understood from Figures 18A to 18H.

The case where the predetermined factor J is the vehicle speed, that is, the case where the ratio changing means 42 changes the vibrator control ratio according to the vehicle speed will be described, hereinbelow. Figures 20A and 20B respecively show the relation of the amounts of the adjusted reference signals x₁ and x₂ to the vehicle speed, and the relation of the values of the convergent factors α₁ and α₂ to the vehicle speed when the vibrator control ratio is changed according to the vehicle speed.

As shown in Figures 20A and 20B, the ratio changing means 42 causes the attenuators 40a and 40b to increase the amount of the adjusted reference signal x₁ input into the adaptive filter F₁ and reduce the adjusted reference signal x₂ input into the adaptive filter F₂ in the low engine speed range (to nullify the adjusted reference signal x₂ when the vehicle speed is zero), to reduce the adjusted reference signal x₁ and increase the amount of the adjusted reference signal x₂ in the high engine speed range, and to increase the amount of the adjusted reference signal x₁ input into the adaptive filter F₁ and reduce the adjusted reference signal x₂ input into the adaptive filter F₂ in the highest vehicle speed range. At the same time, the ratio changing means 42 reduces the convergent factor α₂ for the detecting signal e₂ from the microphone 2 and sets the convergent factor α₁ for the detecting signal e₁ from the acceleration sensor 32 to the standard value in the low vehicle speed range, sets the convergent factor α₂ for the detecting signal e₂ to the standard value and reduces the convergent factor α₁ for the detecting signal e₁ in the high vehicle speed range, and reduces the convergent factor α₂ for the detecting signal e₂ from the microphone 2 and sets the convergent factor α₁ for the detecting signal e₁ from the acceleration sensor 32 to the standard value in the highest vehicle speed range.

In this example, when the vehicle speed is in the low speed range, damping of the vibration of the vehicle body 1 is preferentially effected and the drive signal y₂ for the speaker 4 is output in an amount less than the optimal amount (especially when the vehicle speed is zero, the amount of the drive signal y₂ for the speaker 4 is nullified). With this arrangement, in the low vehicle speed range where the vibration of the vehicle body 1 bothers the passengers more than the noise in the cabin, the vibration of the vehicle body 1 can be effectively damped, while consumption of the electric power is suppressed by less driving the speaker 4 driving of which little serves to the passengers. In the high vehicle speed range, damping of the noise in the cabin is preferentially effected and the drive signal y₁ for the vibrating engine mount 36 is output in an amount less than the optimal amount. With this arrangement, in the high vehicle speed range where the noise in the cabin bothers the passengers more than the vibration of the vehicle body 1, the noise in the cabin can be effectively damped, while consumption of the electric power is suppressed by less driving the vibrating engine mount 36 driving of which little serves to the passengers. In the highest vehicle speed range, damping of the vibration of the vehicle body 1 is preferentially effected and the drive signal y₂ for the speaker 4 is output in an amount less than the optimal amount. With this arrangement, in the highest vehicle speed range where the level of noise such as road noise, wind noise or the like which is not caused due to the vibration of the power unit increases and satisfactory vibration damping effect cannot be obtained even if the speaker 4 is driven, consumption of the electric power is suppressed by less driving the speaker 4.

The case where the predetermined factor J is the load on the engine, that is, the case where the ratio changing means 42 changes the vibrator control ratio according to the engine load will be described, hereinbelow. Figures 21A to 21C respecively show the relation of the amounts of the adjusted reference signals x₁ and x₂ to the engine load, the relation of the values of the convergent factors α₁ and α₂ to the engine load when the engine load increases, and the relation of the values of the convergent factors α₁ and α₂ to the engine load when the engine load decreases in the case where the ratio changing means 42 changes the vibrator control ratio according to the engine load.

As shown in Figures 21A to 21C, the ratio changing means 42 causes the attenuators 40a and 40b to increase the amount of the adjusted reference signal x₁ input into the adaptive filter F₁ and reduce the adjusted reference signal x₂ input into the adaptive filter F₂ when the engine load exceeds a first predetermined value, and to reduce the adjusted reference signal x₁ and increase the amount of the adjusted reference signal x₂ when the engine load exceeds a second predetermined value. At the same time, the ratio changing means 42 reduces the convergent factor α₂ for the detecting signal e₂ from the microphone 2 and sets the convergent factor α₁ for the detecting signal e₁ from the acceleration sensor 32 to the standard value when the engine load exceeds the first predetermined value, and the ratio changing means 42 sets the convergent factor α₂ for the detecting signal e₂ to the standard value and reduces the convergent factor α₁ for the detecting signal e₁ when the engine load exceeds the second predetermined value.

In this example, when the engine load exceeds the first predetermined value, damping of the vibration of the vehicle body 1 is preferentially effected and the drive signal y₂ for the speaker 4 is output in an amount less than the optimal amount. With this arrangement, when the engine load is between the first and second predetermined values where the vibration of the vehicle body 1 bothers the passengers more than the noise in the cabin, the vibration of the vehicle body 1 can be effectively damped, while consumption of the electric power is suppressed by less driving the speaker 4 driving of which little serves to the passengers. When the engine load exceeds the second predetermined, damping of the noise in the cabin is preferentially effected and the drive signal y₁ for the vibrating engine mount 36 is output in an amount less than the optimal amount. With this arrangement, when the engine load is heavier than the second predetermined value where the level of the vibration of the vehicle body 1 is too high to satisfactorily damp by driving the vibrating engine mount 36, consumption of the electric power is suppressed by less driving the vibrating engine mount 36.

The case where the predetermined factor J is the loudness of the audio system on the vehicle, that is, the case where the ratio changing means 42 changes the vibrator control ratio according to the loudness of the audio system on the vehicle will be described, hereinbelow. Figures 22A and 22B respecively show the relation of the amounts of the adjusted reference signals x₁ and x₂ to the loudness of the audio system, and the relation of the values of the convergent factors α₁ and α₂ to the loudness of the audio system in the case where the ratio changing means 42 changes the vibrator control ratio according to the loudness of the audio system.

As shown in Figurea 22A and 22B, the ratio changing means 42 causes the attenuators 40a and 40b to increase the amount of the adjusted reference signal x₁ input into the adaptive filter F₁ and reduce the adjusted reference signal x₂ input into the adaptive filter F₂ when the loudness of the audio system exceeds a predetermined value. At the same time, the ratio changing means 42 reduces the convergent factor α₂ for the detecting signal e₂ from the microphone 2 and sets the convergent factor α₁ for the detecting signal e₁ from the acceleration sensor 32 to the standard value when the loudness of the audio system exceeds the predetermined value.

In this example, when the loudness of the audio system exceeds the predetermined value, damping of the vibration of the vehicle body 1 is preferentially effected and the drive signal y₂ for the speaker 4 is output in an amount less than the optimal amount. With this arrangement, when the loudness of the audio system is higher than the predetermined value where the level of the sound of the audio system is too high and the noise in the cabin cannot be satisfactorily damped by driving of the speaker 4, consumption of the electric power is suppressed by less driving the speaker 4.

The case where the predetermined factor J is the degree of charge of the battery on the vehicle, that is, the case where the ratio changing means 42 changes the vibrator control ratio according to the degree of charge of the battery will be described, hereinbelow. Figures 23A and 23B respecively show the relation of the amounts of the adjusted reference signals x₁ and x₂ to the degree of charge of the battery, and the relation of the values of the convergent factors α₁ and α₂ to the degree of charge of the battery in the case where the ratio changing means 42 changes the vibrator control ratio according to the degree of charge of the battery.

As shown in Figures 23A and 23B, the ratio changing means 42 causes the attenuators 40a and 40b to reduce the amount of the adjusted reference signal x₁ input into the adaptive filter F₁ when the degree of charge of the battery is lower than a predetermined value while keeping the amount of the adjusted reference signal x₂ input into the adaptive filter F₂ large irrespective of the degree of charge of the battery. At the same time, the ratio changing means 42 reduces the convergent factor α₁ for the detecting signal e₁ from the acceleration sensor 32 when the degree of charge of the battery is lower than the predetermined value while keeping the convergent factor α₂ for the detecting signal e₂ from the microphone 2 at the standard value irrespective of the degree of charge of the battery.

In this example, when the degree of charge of the battery is poor, damping of the noise is preferentially effected and the drive signal y₁ for the vibrating engine mount 36 is output in an amount less than the optimal amount. The vibrating engine mount 36 consumes electric power more than the speaker 4, and accordingly, the vibrating engine mount 36 is less driven until the degree of charge of the battery is improved.

The case where the predetermined factor J is the electric load, that is, the case where the ratio changing means 42 changes the vibrator control ratio according to the electric load will be described, hereinbelow. Figures 24A and 24B respecively show the relation of the amounts of the adjusted reference signals x₁ and x₂ to the electric load, and the relation of the values of the convergent factors α₁ and α₂ to the electric load in the case where the ratio changing means 42 changes the vibrator control ratio according to the electric load.

As shown in Figures 24A and 24B, the ratio changing means 42 causes the attenuators 40a and 40b to reduce the amount of the adjusted reference signal x₁ input into the adaptive filter F₁ when the electric load exceeds a predetermined value while keeping the amount of the adjusted reference signal x₂ input into the adaptive filter F₂ large irrespective of the electric load. At the same time, the ratio changing means 42 reduces the convergent factor α₁ for the detecting signal e₁ from the acceleration sensor 32 when the electric load exceeds the predetermined value while keeping the convergent factor α₂ for the detecting signal e₂ from the microphone 2 at the standard value irrespective of the electric load.

In this example, when the electric load is heavy, damping of the noise is preferentially effected and the drive signal y₁ for the vibrating engine mount 36 is output in an amount less than the optimal amount. The vibrating engine mount 36 consumes electric power more than the speaker 4, and accordingly, the vibrating engine mount 36 is less driven in order to reduce the electric load.

The case where the predetermined factor J is the vibration of the vehicle body 1 which is not caused by the vibration of the engine, that is, the case where the ratio changing means 42 changes the vibrator control ratio according to the vibration of the vehicle body 1 which is not caused by the vibration of the engine will be described, hereinbelow. Figures 25A and 25B respecively show the relation of the amounts of the adjusted reference signals x₁ and x₂ to the vibration of the vehicle body 1 which is not caused by the vibration of the engine, and the relation of the values of the convergent factors α₁ and α₂ to the vibration of the vehicle body 1 which is not caused by the vibration of the engine in the case where the ratio changing means 42 changes the vibrator control ratio according to the vibration of the vehicle body 1 which is not caused by the vibration of the engine.

As shown in Figures 25A and 25B, the ratio changing means 42 causes the attenuators 40a and 40b to reduce the amount of the adjusted reference signal x₁ input into the adaptive filter F₁ and increase the adjusted reference signal x₂ input into the adaptive filter F₂ when the vibration of the vehicle body 1 which is not caused by the vibration of the engine exceeds a predetermined level. At the same time, the ratio changing means 42 reduces the convergent factor α₁ for the detecting signal e₁ from the acceleration sensor 32 and sets the convergent factor α₂ for the detecting signal e₂ from the microphone 2 to the standard value when the vibration of the vehicle body 1 which is not caused by the vibration of the engine exceeds a predetermined level.

In this example, when the vibration of the vehicle body 1 which is not caused by the vibration of the engine exceeds a predetermined level, damping of the noise in the cabin is preferentially effected and the drive signal y₁ for the vibrating engine mount 36 is output in an amount less than the optimal amount. With this arrangement, when the level of the vibration of the vehicle body 1 which is not caused by the vibration of the engine is very high and the vibration of the vehicle body 1 cannot be satisfactorily damped by driving the vibrating engine mount 36, consumption of the electric power is suppressed by less driving the vibrating engine mount 36.

The vibration damping system in accordance with the present invention may be variously modified without limiting to the embodiments described above. Further, though, in the embodiments described above, an optimization technique (LMS) is employed in the calculation performed by the drive control means, the present invention can also be applied to the vibration damping system having a drive control means which performs calculation without using an optimization technique.

## Claims

1. A vibration damping system for a vehicle comprising a vibration detecting means (32, 2) which detects vibration of solid elements on the vehicle and vibration of air inside the vehicle, a first vibrator (36) which supports a power unit (E) relative to the vehicle body (1) and directly vibrates the vehicle body (1), a second vibrator (4) which directly vibrates air inside the vehicle body (1), a drive control means (6) which performs calculation on the basis of at least one detecting signal (e₁, e₂) from the vibration detecting means (32, 2) and controls the first and the second vibrators (36, 4) on the basis of the result of the calculation so that the vibration of the solid elements and the vibration of air inside the vehicle body (1) are damped, wherein a ratio changing means (42) changes the vibrator control ratio of the first and second vibrators (36, 4) according to the condition of a predetermined factor (J) of the vehicle by changing the ratio of the part of the operational power of the drive control means (6) allotted to the control of the first vibrator (36) to the part of the operational power of the drive control means (6) allotted to the control of the second vibrator (4).

2. A vibration damping system for a vehicle comprising a vibration detecting means (32, 2) which detects vibration of solid elements on the vehicle and vibration of air inside the vehicle, a first vibrator (36) which supports a power unit (E) relative to the vehicle body (1) and directly vibrates the vehicle body (1), a second vibrator (4) which directly vibrates air inside the vehicle body (1), a drive control means (6) which performs calculation on the basis of at least one detecting signal (e₁, e₂) from the vibration detecting means (32, 2) and controls the first and the second vibrators (36, 4) on the basis of the result of the calculation so that the vibration of the solid elements and the vibration of air inside the vehicle body (1) are damped, wherein a ratio changing means (42) changes the vibrator control ratio of the first and second vibrators (36, 4) according to the condition of a predetermined factor (J) of the vehicle by changing the ratio of the proportion of the amount of the vibration of the first vibrator (36) set by the drive control means (6) to the amount of the vibration of the first vibrator (36), optimal to damp the vibration of the solid element, to the proportion of the amount of the vibration of the second vibrator (4) set by the drive control means (6) to the amount of the vibration of the second vibrator, optimal to damp the vibration of the air inside the vehicle body.

3. A vibration damping system as defined in claim 1 or 2 in which said predetermined factor of the vehicle is the engine speed.

4. A vibration damping system as defined in claim 1 or 2 in which said predetermined factor (J) of the vehicle is the vehicle speed.

5. A vibration damping system as defined in claim 1 or 2 in which said predetermined factor (J) of the vehicle is the loudness of an audio system in the vehicle.

6. A vibration damping system as defined in claim 1 or 2 in which said predetermined factor (J) of the vehicle is the degree of opening of the window.

7. A vibration damping system as defined in claim 1 or 2 in which said predetermined factor of the vehicle is the number of the passengers in the vehicle.

8. A vibration damping system as defined in claim 1 or 2 in which said predetermined factor (J) of the vehicle is the level of noise included in at least one detecting signal (e₁, e₂) from the vibration detecting means (32, 2).

9. A vibration damping system as defined in claim 1 or 2 in which said predetermined factor (J) of the vehicle is the electric load.

10. A vibration damping system as defined in claim 1 or 2 in which said predetermined factor of the vehicle is the acceleration and deceleration of the vehicle and said ratio changing means (42) changes the vibrator control ratio so that the fraction of the vibrator control ratio for the first vibrator (36) is increased when the acceleration or deceleration of the vehicle increases.

11. A vibration damping system as defined in claim 1 or 2 in which said predetermined factor (J) or the vehicle is the air flow of an air-conditioner in the vehicle and said ratio changing means (42) changes the vibrator control ratio so that the fraction of the vibrator control ratio for the first vibrator (36) is increased when the air flow increases.

12. A vibration damping system as defined in claim 1 or 2 in which said predetermined factor (J) of the vehicle is whether the vibrators (36, 4) are in the normal condition or in an abnormal condition, and said ratio changing means (42) changes the vibrator control ratio so that the fraction of the vibrator control ratio for the other vibrator is increased when one of the vibrators is in an abnormal condition.

13. A vibration damping system as defined in claim 1 or 2 in which said predetermined factor (J) of the vehicle is the vibration of the power unit (E), and said ratio changing means (42) changes the vibrator control ratio so that the fraction of the vibrator control ratio for the first vibrator (36) is increased when the amplitude of the low frequency component of the vibration of the power unit increases and the fraction of the vibrator control ratio for the second vibrator (4) is increased when the amplitude of the high frequency component of the vibration of the power unit (E) increases.

14. A vibration damping system as defined in any one of claims 1 to 13, further comprising a manual ratio setting means (70) for manually setting the vibrator control ratio.

## Patentansprüche

1. Vibrationsdämpfungssystem für ein Kraftfahrzeug, umfassend Vibrationsdetektionseinrichtungen (32, 2), welche eine Vibration von festen bzw. starren Elementen an dem Kraftfahrzeug und eine Vibration von Luft innerhalb des Kraftfahrzeugs detektieren, einen ersten Vibrator (36), welcher eine Leistungs- bzw. Krafteinheit (E) relativ zu dem Fahrzeugkörper bzw. der Fahrzeugkarosserie (1) abstützt und direkt den Fahrzeugkörper (1) vibriert bzw. in Schwingungen versetzt, einen zweiten Vibrator (4), welcher direkt die Luft innerhalb des Fahrzeugkörpers (4) vibriert bzw. in Schwingungen versetzt, Antriebssteuer- bzw. -regeleinrichtungen (6), welche eine Berechnung auf der Basis von zumindest einem Detektionssignal (e₁, e₂) von den Vibrationsdetektionseinrichtungen (32, 2) durchführt und die ersten und zweiten Vibratoren (36, 4) auf der Basis des Resultats der Berechnung steuert bzw. regelt, so daß die Vibration der festen Elemente und die Vibration von Luft innerhalb des Fahrzeugkörpers (1) gedämpft sind, worin Verhältnisänderungseinrichtungen (42) das Vibrator-Steuer- bzw. -Regelverhältnis der ersten und zweiten Vibratoren (36, 4) entsprechend dem Zustand eines vorbestimmten Faktors (J) des Kraftfahrzeugs ändern, indem das Verhältnis des Anteils der Antriebskraft der Antriebssteuereinrichtungen (6), welche der Regelung bzw. Steuerung des ersten Vibrators (36) zugeteilt sind, zu dem Anteil der Antriebskraft der Antriebssteuereinrichtungen (6), welche der Regelung bzw. Steuerung des zweiten Vibrators (4) zugeteilt sind, geändert wird.

2. Vibrationsdämpfungssystem für ein Kraftfahrzeug, umfassend Vibrationsdetektionseinrichtungen (32, 2), welche eine Vibration von festen bzw. starren Elementen an dem Kraftfahrzeug und eine Vibration von Luft innerhalb des Kraftfahrzeugs detektieren, einen ersten Vibrator (36), welcher eine Leistungs- bzw. Krafteinheit (E) relativ zu dem Fahrzeugkörper bzw. der Fahrzeugkarosserie (1) abstützt und direkt den Fahrzeugkörper (1) vibriert bzw. in Schwingungen versetzt, einen zweiten Vibrator (4), welcher direkt die Luft innerhalb des Fahrzeugkörpers (4) vibriert bzw. in Schwingungen versetzt, Antriebssteuer- bzw. -regeleinrichtungen (6), welche eine Berechnung auf der Basis von zumindest einem Detektionssignal (e₁, e₂) von den Vibrationsdetektionseinrichtungen (32, 2) durchführt und die ersten und zweiten Vibratoren (36, 4) auf der Basis des Resultats der Berechnung steuert bzw. regelt, so daß die Vibration der festen Elemente und die Vibration von Luft innerhalb des Fahrzeugkörpers (1) gedämpft sind, worin Verhältnisänderungseinrichtungen (42) das Vibrator-Steuer- bzw. -Regelverhältnis der ersten und zweiten Vibratoren (36, 4) entsprechend dem Zustand eines vorbestimmten Faktors (J) des Kraftfahrzeugs ändern, indem das Verhältnis des Anteils des Ausmaßes der Vibration des ersten Vibrators (36), welches durch die Antriebssteuereinrichtungen (6) eingestellt ist, zu dem Ausmaß der Vibration des ersten Vibrators (36), welche für ein Dämpfen der Vibration des festen bzw. starren Elements optimal ist, zu dem Verhältnis des Ausmaßes der Vibration des zweiten Vibrators (4), welches durch die Antriebssteuereinrichtungen (6) eingestellt ist, zu dem Ausmaß der Vibration des zweiten Vibrators, welches für ein Dämpfen der Vibration der Luft innerhalb des Fahrzeugkörpers optimal ist, geändert wird.

3. Vibrationsdämpfungssystem nach Anspruch 1 oder 2, in welchem der vorbestimmte Faktor des Kraftfahrzeugs die Motordrehzahl bzw. -geschwindigkeit ist.

4. Vibrationsdämpfungssystem nach Anspruch 1 oder 2, in welchem der vorbestimmte Faktor (J) des Kraftfahrzeugs die Fahrzeuggeschwindigkeit ist.

5. Vibrationsdämpfungssystem nach Anspruch 1 oder 2, in welchem der vorbestimmte Faktor (J) des Kraftfahrzeugs die Lautstärke eines Audiosystems in dem Kraftfahrzeug ist.

6. Vibrationsdämpfungssystem nach Anspruch 1 oder 2, in welchem der vorbestimmte Faktor (J) des Kraftfahrzeugs das Ausmaß der Öffnung des Fensters ist.

7. Vibrationsdämpfungssystem nach Anspruch 1 oder 2, in welchem der vorbestimmte Faktor des Kraftfahrzeugs die Anzahl der Passagiere in dem Kraftfahrzeug ist.

8. Vibrationsdämpfungssystem nach Anspruch 1 oder 2, in welchem der vorbestimmte Faktor (J) des Kraftfahrzeugs das Geräuschniveau ist, welches in wenigstens einem Detektionssignal (e₁, e₂) von den Vibrationsdetektionseinrichtungen (32, 2) enthalten ist.

9. Vibrationsdämpfungssystem nach Anspruch 1 oder 2, in welchem der vorbestimmte Faktor (J) des Kraftfahrzeugs die elektrische Last ist.

10. Vibrationsdämpfungssystem nach Anspruch 1 oder 2, in welchem der vorbestimmte Faktor des Kraftfahrzeugs die Beschleunigung und Verzögerung des Kraftfahrzeugs ist und die Verhältnisänderungseinrichtungen (42) das Vibrator-Regel- bzw. -Steuerverhältnis derart ändern, daß der Bruchteil des Vibrator-Steuerverhältnisses für den ersten Vibrator (36) erhöht wird, wenn die Beschleunigung oder Verzögerung des Kraftfahrzeugs ansteigt.

11. Vibrationsdämpfungssystem nach Anspruch 1 oder 2, in welchem der vorbestimmte Faktor (J) des Kraftfahrzeugs der Luftstrom einer Klimaanlage in dem Kraftfahrzeug ist und die Verhältnisänderungseinrichtungen (42) das Vibrator-Regel- bzw. -Steuerverhältnis so ändern, daß der Bruchteil des Vibrator-Steuerverhältnisses für den ersten Vibrator (36) erhöht wird, wenn der Luftstrom ansteigt.

12. Vibrationsdämpfungssystem nach Anspruch 1 oder 2, in welchem der vorbestimmte Faktor (J) des Kraftfahrzeugs ist, ob die Vibratoren (36, 4) sich in dem Normalzustand oder in einem abnormalen Zustand befinden, und die Verhältnisänderungseinrichtungen (42) das Vibrator-Steuer- bzw. -Regel-verhältnis so ändern, daß der Bruchteil des Vibrator-Steuerverhältnisses für den anderen Vibrator erhöht wird, wenn sich einer der Vibratoren in einem abnormalen Zustand befindet.

13. Vibrationsdämpfungssystem nach Anspruch 1 oder 2, in welchem der vorbestimmte Faktor (J) des Kraftfahrzeugs die Vibration der Leistungs- bzw. Krafteinheit (E) ist und die Verhältnisänderungseinrichtungen (42) das Vibrator-Steuer- bzw. -Regelverhältnis so ändern, daß der Bruchteil des Vibrator-Steuerverhältnisses für den ersten Vibrator (36) erhöht wird, wenn die Amplitude der Komponente niedriger Frequenz der Vibration der Leistungseinheit ansteigt, und daß der Bruchteil des Vibrator-Steuerverhältnisses für den zweiten Vibrator (4) erhöht wird, wenn die Amplitude der Komponente hoher Frequenz der Vibration der Leistungseinheit (E) ansteigt.

14. Vibrationsdämpfungssystem nach einem der Ansprüche 1 bis 13, weiters umfassend manuelle Verhältnis-Einstelleinrichtungen (70) für ein manuelles Einstellen des Vibrator-Steuer- bzw. -Regelverhältnisses.

## Revendications

1. Système d'atténuation de vibrations pour un véhicule comprenant un moyen (32, 2) de détection de vibrations qui détecte des vibrations d'éléments solides du véhicule et des vibrations de l'air à l'intérieur du véhicule, un premier vibreur (36) qui supporte un module (E) de puissance par rapport à la carrosserie (1) de véhicule et fait vibrer directement la carrosserie (1) de véhicule, un second vibreur (4) qui fait vibrer directement l'air qui se trouve à l'intérieur de la carrosserie (1) de véhicule, un moyen (6) de commande d'attaque qui effectue un calcul sur la base d'au moins un signal (e₁, e₂) de détection provenant du moyen (32, 2) de détection de vibrations et commande les premier et second vibreurs (36, 4) sur la base du résultat du calcul de façon à atténuer les vibrations des éléments solides et les vibrations de l'air à l'intérieur de la carrosserie (1) de véhicule, dans lequel un moyen (42) de variation de rapport fait varier le rapport de commande de vibreur des premier et second vibreurs (36, 4) en fonction de l'état d'un facteur prédéterminé (J) du véhicule, en faisant varier le rapport de la part de l'énergie de fonctionnement du moyen (6) de commande d'attaque alloué à la commande du premier vibreur (36) à la part de l'énergie de fonctionnement du moyen (6) de commande d'attaque alloué à la commande du second vibreur (4).

2. Système d'atténuation de vibrations pour un véhicule comprenant un moyen (32, 2) de détection de vibrations qui détecte des vibrations d'éléments solides du véhicule et des vibrations de l'air à l'intérieur du véhicule, un premier vibreur (36) qui supporte un module (E) de puissance par rapport à la carrosserie (1) de véhicule et fait vibrer directement la carrosserie (1) de véhicule, un second vibreur (4) qui fait vibrer directement l'air à l'intérieur de la carrosserie (1) de véhicule, un moyen (6) de commande d'attaque qui effectue un calcul sur la base d'au moins un signal (e₁, e₂) de détection provenant du moyen (32, 2) de détection de vibrations et commande les premier et second vibreurs (36, 4) sur la base du résultat du calcul de façon à atténuer les vibrations des éléments solides et les vibrations de l'air a l'intérieur de la carrosserie (1) de véhicule, dans lequel un moyen (42) de variation de rapport fait varier le rapport de commande de vibreur des premier et second vibreurs (36, 4) en fonction de l'état d'un facteur prédéterminé (J) du véhicule, en faisant varier le rapport de la proportion de quantité de vibrations du premier vibreur (36) fixée par le moyen (6) de commande d'attaque à la quantité de vibrations du premier vibreur (36), optimale pour atténuer les vibrations de l'élément solide, à la proportion de la quantité de vibrations du second vibreur (4) fixée par le moyen (6) de commande d'attaque à la quantité des vibrations du second vibreur, optimale pour atténuer les vibrations de l'air à l'intérieur de la carrosserie de véhicule.

3. Système d'atténuation de vibrations selon la revendication 1 ou 2, dans lequel ledit facteur prédéterminé du véhicule est le régime de moteur.

4. Système d'atténuation de vibrations selon la revendication 1 ou 2, dans lequel ledit facteur prédéterminé (J) du véhicule est la vitesse de véhicule.

5. Système d'atténuation de vibrations selon la revendication 1 ou 2, dans lequel ledit facteur prédéterminé (J) du véhicule est l'intensité acoustique d'un système audio qui se trouve dans le véhicule.

6. Système d'atténuation de vibrations selon la revendication 1 ou 2, dans lequel ledit facteur prédéterminé (J) du véhicule est le degré d'ouverture de la fenêtre.

7. Système d'atténuation de vibrations selon la revendication 1 ou 2, dans lequel ledit facteur prédéterminé du véhicule est le nombre de passagers qui se trouvent dans le véhicule.

8. Système d'atténuation de vibrations selon la revendication 1 ou 2, dans lequel ledit facteur prédéterminé (J) du véhicule est le niveau de bruit inclus dans au moins un signal (e₁, e₂) de détection provenant du moyen (32, 2) de détection de vibrations.

9. Système d'atténuation de vibrations selon la revendication 1 ou 2, dans lequel ledit facteur prédéterminé (J) du véhicule est la charge électrique.

10. Système d'atténuation de vibrations selon la revendication 1 ou 2, dans lequel ledit facteur prédéterminé du véhicule est l'accélération et la décélération du véhicule et dans lequel ledit moyen (42) de variation de rapport fait varier le rapport de commande de vibreur de sorte que la fraction du rapport de commande de vibreur du premier vibreur (36) augmente lorsque le véhicule accélère ou qu'il décélère.

11. Système d'atténuation de vibrations selon la revendication 1 ou 2, dans lequel ledit facteur prédéterminé (J) du véhicule est le flux d'air d'un climatiseur dans le véhicule et dans lequel ledit moyen (42) de variation de rapport fait varier le rapport de commande de vibreur de sorte que la fraction du rapport de commande de vibreur du premier vibreur (36) augmente lorsque le flux d'air augmente.

12. Système d'atténuation de vibrations selon la revendication 1 ou 2, dans lequel ledit facteur prédéterminé (J) du véhicule se rapporte au fait que les vibreurs (36, 4) sont dans l'état normal ou dans un état anormal, et dans lequel ledit moyen (42) de variation de rapport fait varier le rapport de commande de vibreur de sorte que la fraction du rapport de commande de vibreur de l'autre vibreur augmente lorsque l'un des vibreurs se trouve dans un état anormal.

13. Système d'atténuation de vibrations selon la revendication 1 ou 2, dans lequel ledit facteur prédéterminé (J) du véhicule est la quantité de vibrations du module (E) de puissance, et dans lequel ledit moyen (42) de variation de rapport fait varier le rapport de commande de vibreur de sorte que la fraction du rapport de commande de vibreur du premier vibreur (36) augmente lorsque l'amplitude de la composante de basse fréquence des vibrations du module de puissance augmente et lorsque la fraction du rapport de commande de vibreur du second vibreur (4) augmente lorsque l'amplitude de la composante de haute fréquence des vibrations du module (E) de puissance augmente.

14. Système d'atténuation de vibrations selon l'une quelconque des revendications 1 à 13, comprenant en outre un moyen manuel (70) de réglage de rapport servant à régler manuellement le rapport de commande de vibreur.
